# EUROPÄISCHE PATENTSCHRIFT

(11) **EP 2 676 820 B1**
(45) Veröffentlichungstag und Bekanntmachung des Hinweises auf die Patenterteilung: **18.05.2016**
(21) Anmeldenummer: 13172300.9
(22) Anmeldetag: 17.06.2013
(51) Int. Cl.: B60D 1/06, B60D 1/62

(54) **Anhängekupplung**
Tow hitch
Attelage

(30) Priorität: 19.06.2012 DE 102012105316
(43) Veröffentlichungstag der Anmeldung: 25.12.2013
(73) Patentinhaber: Scambia Holdings Cyprus Limited, 3106 Limassol (CY)
(72) Erfinder: Kadnikov, Aleksej, 71229 Leonberg (DE); Rimmelspacher, Bernhard, 76287 Rheinstetten (DE); Gentner, Wolfgang, 71711 Steinheim (DE)
(74) Vertreter: Hoeger, Stellrecht & Partner Patentanwälte mbB

(56) Entgegenhaltungen:
- EP-A1- 2 316 668
- EP-A2- 1 160 105
- EP-A2- 2 366 563
- DE-A1- 19 810 378

## Beschreibung

Die Erfindung betrifft eine Anhängekupplung für Kraftfahrzeuge, umfassend einen an einer Fahrzeugkarosserie montierbaren Kupplungskugelträger und eine Kupplungskugel mit einem Kugelkörper, der eine sich zwischen einem Kugelansatz und einer oberen Endfläche des Kugelkörpers erstreckende Kugeloberfläche aufweist.

Derartige Anhängekupplungen sind aus dem Stand der Technik beispielweise der gattungsgemäßen EP 2 366 563 A2 bekannt.

Der Kupplungskugelträger kann dabei einen üblichen, an einer Fahrzeugkarosserie mit Längsträgern montierten Querträger und einen am Querträger gehaltenen Kugelhals umfassen, wobei der Kugelhals fest mit dem Querträger verbunden ist.

Der Kupplungskugelträger kann aber auch einen derartigen Querträger mit einem abnehmbaren Kugelhals umfassen oder der Kupplungskugelträger kann einen am relativ zum Querträger verschwenkbaren Kugelhals umfassen.

Die Kugeloberfläche des Kugelkörpers umfasst dabei einen nennenswerten Teil einer vollständigen Kugelfläche, stellt jedoch in der Regel keine vollständige Kugelfläche dar, da einerseits der Kugelkörper auf einem Kugelansatz sitzt und andererseits der Kugelkörper vielfach auf einer dem Kugelansatz gegenüberliegenden Seite eine obere Endfläche in Form einer Abflachung aufweist, so dass die Kugeloberfläche sich zwischen dem Kugelansatz und der oberen Endfläche in Form der Abflachung erstreckt, jedoch diese nicht mit umfasst.

Der Erfindung liegt die Aufgabe zugrunde, einen an der Kupplungskugel angreifenden Körper hinsichtlich seiner Ausbildung und /oder Ausrichtung zu erfassen.

Diese Aufgabe wird erfindungsgemäß bei einer Anhängekupplung der eingangs beschriebenen Art durch die Merkmale des Anspruchs 1 gelöst.

Der Vorteil der erfindungsgemäßen Lösung ist darin zu sehen, dass durch die Sensorzone und die Anordnung mehrerer Detektionsorte in der Sensorzone die Möglichkeit besteht, in optimaler Weise zu erkennen, über welche Fläche dieser Körper sich erstreckt und wie dieser Körper gegebenenfalls ausgerichtet ist.

Die stationäre Anordnung der Detektionsorte und der Sensoreinheit bedeutet, dass diese bei in Arbeitsstellung stehendem Kugelhals stationär, das heißt feststehend, relativ zur Längsmittelebene der Anhängekupplung und somit auch insbesondere relativ zur Längsmittelebene der Fahrzeugkarosserie angeordnet sind, so dass alle von den Sensoreinheiten an den Detektionsorten erfassten Informationen in einem relativ zur Längsmittelebene der Anhängekupplung feststehenden Koordinatensystem vorliegen.

Insbesondere ist dabei vorgesehen, dass der Nahbereich ein Bereich über der Kugeloberfläche ist, der sich mindestens über einen radialen Abstand von 0,5 cm von der Kugeloberfläche ausgehend erstreckt.

Ferner ist vorzugsweise vorgesehen, dass der Nahbereich sich bis zu einem maximalen radialen Abstand von 5 cm, noch besser einem maximalen radialen Abstand von 3 cm oder vorteilhafterweise einem maximalen radialen Abstand von 1 cm über der Kugeloberfläche erstreckt.

Hinsichtlich der Anordnung der Sensorzone innerhalb der Kugeloberfläche wurden bislang keine näheren Angaben gemacht.

Insbesondere ist dabei vorgesehen, dass die Sensorzone auf einer Seite einer senkrecht zu einer Mittelachse der Kupplungskugel verlaufenden Äquatorialebene der Kugeloberfläche angeordnet ist.

Damit besteht die Möglichkeit, die Sensorzone in einem möglichst geringeren Belastungen ausgesetzten Bereich der Kugeloberfläche anzuordnen.

Insbesondere ist dabei vorgesehen, dass die Sensorzone außerhalb einer Tragzone der Kugeloberfläche angeordnet ist, in welcher üblicherweise eine Tragpfanne, beispielsweise einer Zugkugelkupplung, aufliegt.

Ferner ist vorzugsweise vorgesehen, dass die Sensorzone außerhalb einer Verschlussanlagezone angeordnet ist, in welcher üblicherweise ein Verschlusselement einer Zugkugelkupplung anliegt.

Vorzugsweise ist dabei vorgesehen, dass die Sensorzone sich maximal bis zu einem Abstand von der Äquatorialebene erstreckt, der einem halben Radius der Kugeloberfläche entspricht, so dass dadurch beispielsweise die Möglichkeit besteht, die Sensorzone außerhalb einer durch eine Tragpfanne einer Zugkugelkupplung beaufschlagten Tragzone anzuordnen.

Noch vorteilhafter ist es, wenn die Sensorzone sich maximal bis zu einem Abstand von der Äquatorialebene erstreckt, der einem Drittel des Radius der Kugeloberfläche entspricht, so dass sichergestellt ist, dass die Sensorzone außerhalb der Tragzone der Kugeloberfläche liegt.

Prinzipiell ist es denkbar, dass die Sensorzone bereits ausgehend von der Äquatorialebene oder beiderseits der Äquatorialebene liegt.

Um jedoch insbesondere bei einer Zugbelastung des Kugelkörpers sicherzustellen, dass der Kugelkörper die notwendige Stabilität und Verschleißfestigkeit für eine angreifende Zugkugelkupplung aufweist, ist vorzugsweise vorgesehen, dass die Sensorzone in einem Abstand von der Äquatorialebene angeordnet ist, welcher mindestens einem Zwanzigstel, noch besser einem Zehntel eines Radius der Kugeloberfläche entspricht.

Hinsichtlich der Ausdehnung der Sensorzone über die Kugeloberfläche wurden bislang keine näheren Angaben gemacht.

Eine besonders günstige Anordnung der Sensorzone sieht vor, dass diese zwischen einer unteren Begrenzungsebene und einer oberen Begrenzungsebene liegt, die parallel zur Äquatorialebene verlaufen.

In diesem Fall sieht eine günstige Lösung vor, dass die obere Begrenzungsebene der Sensorzone einen Abstand von der Äquatorialebene aufweist, welcher maximal dem halben Radius der Kugeloberfläche, vorzugsweise maximal einem Drittel des Radius der Kugeloberfläche entspricht.

Ferner ist günstigerweise vorgesehen, dass die untere Begrenzungsebene der Sensorzone einen Abstand von der Äquatorialebene aufweist, der mindestens einem Zwanzigstel, noch besser einem Zehntel eines Radius der Kugeloberfläche entspricht.

Im Rahmen der Erfindung hat es sich als besonders vorteilhaft erwiesen, wenn die Sensorzone zumindest in einem rückwärtigen Oberflächenbereich der Kugeloberfläche liegt, da eine derart angeordnete Sensorzone die Möglichkeit schafft, zumindest in dem für sämtliche Funktionen der Anhängekupplung wichtigsten rückwärtigen Oberflächenbereich zu erkennen, ob ein Körper im Nahbereich vorhanden ist oder nicht.

Ferner ist vorzugsweise vorgesehen, dass sich die Sensorzone um die Mittelachse der Kupplungskugel zumindest über einen Teilumfang der Kugeloberfläche erstreckt.

Damit kann über diesen Teilumfang erfasst werden, ob innerhalb dieses Teilumfangs oder nur in Bereichen dieses Teilumfangs ein Körper in dem Nahbereich der Kugeloberfläche angeordnet ist.

Insbesondere ist es günstig, wenn die Sensorzone sich ausgehend von dem rückwärtigen Oberflächenbereich der Kugeloberfläche in entgegengesetzten Umlaufrichtungen um die Mittelachse zumindest über einen Teilumfang der Kugeloberfläche ausdehnt.

Diese Lösung erlaubt es, einerseits den rückwärtigen Oberflächenbereich durch die Sensorzone zu erfassen und zusätzlich einen sich an den rückwärtigen Oberflächenbereich anschließenden Teilumfang der Kugeloberfläche.

Insbesondere ist es dabei günstig, wenn sich die Sensorzone zumindest bis zu einer durch die Mittelachse verlaufenden Querebene der Kupplungskugel erstreckt. In diesem Fall ist somit die Möglichkeit gegeben, im Bereich des rückwärtigen halben Teilumfangs der Kugeloberfläche zu erfassen, in welchem Maße ein Körper an der Kugeloberfläche anliegt oder nahe derselben steht.

Im Zusammenhang mit der bisherigen Erläuterung der Lage der Sensorzone wurde nicht näher darauf eingegangen, ob die Sensorzone auf einer dem Kugelansatz zugewandten oder dem Kugelansatz abgewandten Seite liegt.

Prinzipiell sind beide Lagen denkbar.

Eine hinsichtlich der festen Verschleißbelastung des Kugelkörpers besonders günstige Lösung sieht jedoch vor, dass die Sensorzone auf einer dem Kugelansatz abgewandten Seite der Äquatorialebene liegt.

Im Zusammenhang mit der bisherigen Erläuterung der einzelnen Ausführungsformen wurden keine näheren Angaben darüber gemacht, wie die Sensoreinheiten arbeiten.

So sieht eine vorteilhafte Lösung vor, dass jede der Sensoreinheiten an dem jeweiligen Detektionsort im Nahbereich über der Kugeloberfläche einen Abstand des Körpers von der Kugeloberfläche erfasst, so dass die Sensoreinheit nicht nur dazu dient, überhaupt die Existenz eines Körpers zu erfassen, sondern auch dazu eingesetzt werden kann, zu erfassen, wie nahe der Körper über der Kugeloberfläche angeordnet ist.

Hinsichtlich der Ausbildung der Sensoreinheiten selbst wurden bislang keine näheren Angaben gemacht.

So sieht eine vorteilhafte Lösung vor, dass die Sensoreinheiten berührungslos arbeitende Sensoreinheiten sind.

Derartige berührungslos arbeitende Sensoreinheiten können mit unterschiedlichen Funktionsprinzipien arbeiten.

So sieht eine vorteilhafte Lösung vor, dass die Sensoreinheiten mit Ultraschall arbeiten.

Eine andere vorteilhafte Lösung sieht vor, dass die Sensoreinheiten als metallische Körper erfassende Sensoreinheiten ausgebildet sind.

Derartige metallische Körper erfassende Sensoreinheiten sind vorzugsweise so ausgebildet, dass sie einen magnetisierbaren Körper erfassende Sensoreinheiten sind.

Dadurch lassen sich insbesondere metallische Körper, die in dem Nahbereich der Kugeloberfläche stehen, besonders vorteilhaft und zuverlässig erfassen.

Insbesondere sind die Sensoreinheiten so ausgebildet, dass sie als eine durch den Körper hervorgerufene Veränderung eines Verlaufs eines Magnetfeldes erfassende Sensoreinheiten ausgebildet sind.

Insbesondere ist bei den derartigen Sensoreinheiten vorgesehen, dass sie einen das Magnetfeld erzeugenden Magnet und einen Magnetfeldsensor aufweisen, wobei der Magnetfeldsensor eine Veränderung des Verlaufs des Magnetfeldes erfasst.

Der Magnet kann beispielsweise ein Elektromagnet sein, wobei bei dem Elektromagnet die Möglichkeit besteht, diesen nur für die Erfassung des Signalwertes zu dem vorgesehenen Zeitpunkt am jeweiligen Detektionsort zu aktivieren. Vorzugsweise ist als Magnet ein Permanentmagnet vorgesehen.

Insbesondere ist vorteilhafterweise vorgesehen, dass jede Sensoreinheit als Magnetfeldsensor ein Hallsensor aufweist.

Hinsichtlich der Detektionsrichtung wurden bislang keine näheren Angaben gemacht.

So sieht eine besonders günstige Lösung vor, dass die Sensoreinheiten am Detektionsort eine Detektionsrichtung mit einer radial zur Mittelachse der Kupplungskugel verlaufenden Komponente aufweisen.

Eine derartige Detektionsrichtung am jeweiligen Detektionsort bietet optimale Möglichkeiten zu erfassen, in welchem Umfang der jeweilige Körper an der Kugeloberfläche in das Nahfeld eintritt.

Ferner wurden im Zusammenhang mit der bisherigen Erläuterung der erfindungsgemäßen Lösung keine näheren Angaben zu der Lage der Detektionsorte innerhalb der Sensorzone gemacht.

So sieht eine vorteilhafte Lösung vor, dass die Detektionsorte in einer um die Mittelachse der Kupplungskugel herum verlaufenden Umlaufrichtung aufeinanderfolgend angeordnet sind, das heißt, dass zur Minimierung der Zahl der erforderlichen Sensoren diese in der Umlaufrichtung möglichst günstig über die Sensorzone verteilt sind.

Eine besonders zweckmäßige Lösung sieht vor, dass die Detektionsorte in einer quer zur Mittelachse der Kupplungskugel, insbesondere senkrecht zur Mittelachse der Kupplungskugel, verlaufenden Detektionsebene liegen.

Hinsichtlich der Anordnung der Sensoreinheiten in der Kupplungskugel wurden im Zusammenhang mit der bisherigen Erläuterung der einzelnen Ausführungsbeispiele keine näheren Angaben gemacht.

So sieht eine vorteilhafte Lösung vor, dass der Kugelkörper der Kupplungskugel mit mindestens einer Ausnehmung zur Aufnahme mindestens einer der Sensoreinheiten versehen ist, das heißt, dass beispielsweise der Kugelkörper für jede Sensoreinheit eine einzelne Ausnehmung aufweisen kann.

Es ist aber auch denkbar, die Ausnehmung so auszubilden, dass diese mehrere der Sensoreinheiten aufnehmen kann.

So sieht eine vorteilhafte Lösung vor, dass die Ausnehmung sich zumindest über einen Teilumfang des Kugelkörpers erstreckend ausgebildet ist.

Eine besonders günstige Lösung sieht vor, dass die Ausnehmung sich um die Mittelachse der Kupplungskugel geschlossen umlaufend in dem Kugelkörper erstreckt.

Eine derartige Ausnehmung könnte beispielsweise als Nut in dem Kugelkörper ausgebildet sein.

Eine andere vorteilhafte Ausbildung einer derartigen Ausnehmung sieht vor, dass die Ausnehmung eine stufenförmig in dem Kugelkörper verlaufende Ausnehmung ist.

Beispielsweise ist in diesem Fall vorgesehen, dass die Ausnehmung eine Innenwand aufweist, die von der Kugeloberfläche bis zu einem Boden der Ausnehmung verläuft, wobei die Innenwand vorzugsweise zylindrisch zur Mittelachse verläuft. In diesem Fall ist die Ausnehmung besonders leicht durch ein an der Innenwand anliegendes ringförmiges Teil verschließbar.

Eine besonders günstige Lösung sieht vor, dass in die Ausnehmung ein Kugelergänzungskörper einsetzbar ist, welcher eine im Bereich der Ausnehmung die Kugeloberfläche ergänzende Außenfläche aufweist, so dass durch den Kugelergänzungskörper im Bereich der Ausnehmung die Kugeloberfläche vollständig ergänzt ist.

Ferner ist in diesem Fall vorzugsweise vorgesehen, dass der Kugelergänzungskörper und die Ausnehmung zusammen ein Freiraum zur Aufnahme der Sensoreinheiten bilden.

Im Zusammenhang mit den bisherigen Lösungen wurde nicht näher spezifiziert, wie die Magnetfeldsensoren in der Ausnehmung oder den Freiraum angeordnet sind.

So wäre es beispielsweise denkbar, alle Magnetfeldsensoren einzeln anzuordnen, was jedoch den Aufwand bei dem Zusammenbau der erfindungsgemäßen Anhängekupplung erhöht.

Aus diesem Grund ist vorgesehen, dass alle Magnetfeldsensoren zu einer ein zusammenhängendes Teil bildenden Sensoranordnung zusammengefasst sind.

Besonders günstig lassen sich die Magnetfeldsensoren dann montieren, wenn die Sensoranordnung einen Sensorkranz bildet, welcher Permanentmagnete bezogen auf die Mittelachse radial außenliegend umschließt.

Dabei können die Permanentmagnete einzelne Magnete sein.

Eine besonders zweckmäßige Lösung sieht jedoch vor, dass die Sensoranordnung einen Ring aus Permanentmagneten aufweist.

Hinsichtlich der Art, der Körper, die durch die Sensoreinheiten erfasst werden sollen, wurden bislang keine näheren Angaben gemacht.

So sieht eine Lösung vor, dass der durch die Sensoreinheiten erfassbare Körper durch eine Kupplung eines Lastenträgers gebildet ist.

Eine andere vorteilhafte Lösung sieht vor, dass der durch die Sensoreinheiten erfassbare Körper durch eine Zugkugelkupplung eines Anhängers gebildet ist.

Ferner wurde im Zusammenhang mit der bisherigen Erläuterung der einzelnen Ausführungsformen nicht näher darauf eingegangen, wie die Sensoreinheiten betrieben und verschaltet sein sollen.

Eine vorteilhafte Lösung sieht dabei vor, dass die Sensoreinheiten mit einer Auswerteeinheit gekoppelt sind, welche die Gesamtheit der von den Sensoreinheiten erzeugten Signalwerte erfasst und auswertet.

Dadurch besteht die Möglichkeit, durch die Gesamtheit der Sensoreinheiten eine Information darüber zu erhalten, in welchem Umfang der jeweilige Körper an der Kugeloberfläche anliegt oder angreift.

Die Auswerteeinheit kann in unterschiedlichster Art und Weise arbeiten.

Eine vorteilhafte Arbeitsweise sieht vor, dass die Auswerteeinheit die an den jeweiligen Detektionsorten erfassten Signalwerte detektionsortbezogen erfasst, das heißt, dass jeder Signalwert in direkter Relation zu dem jeweiligen Detektionsort erfasst und abgespeichert wird.

Insbesondere sind dabei die Detektionsorte stationär zur Längsmittelebene der Anhängekupplung angeordnet, so dass alle Signalwerte auch in einem stationär zur Längsmittelebene vorgesehenen Koordinatensystem vorliegen.

Insbesondere ist es dabei möglich, dass die Auswerteeinheit aus den Signalwerten ein detektionsortbezogenes Signalwertmuster von dem jeweiligen Körper, beispielsweise von der Kupplung oder der Zugkugelkupplung, erfasst.

Insbesondere liegt bei der erfindungsgemäßen Lösung auch das detektionsortbezogene Signalwertmuster in einem relativ zu der Längsmittelebene stationären Koordinatensystem vor.

Dabei ist vorteilhafterweise insbesondere im Falle einer Kupplung oder einer Zugkugelkupplung vorgesehen, dass das detektionsortbezogene Signalwertmuster des Körpers, insbesondere der Kupplung oder der Zugkugelkupplung symmetrisch zu einer Symmetrieebene des Körpers und somit insbesondere der Kupplung oder der Zugkugelkupplung ist.

Um das detektionsortbezogene Muster einfach abspeichern und auswerten zu können, ist vorzugsweise vorgesehen, dass die Auswerteeinheit das detektionsortbezogene Signalwertmuster durch eine Einhüllende annähert, deren Werte eine Funktion der Detektionsorte sind.

Dabei ist es beispielsweise denkbar, dass die Einhüllende durch Parameteranpassung von für die Einhüllende vorgegebenen Funktionen ermittelt wird.

Eine derartige Einhüllende hat ferner den Vorteil, dass sich diese leichter auswerten lässt.

So ist es vorzugsweise vorgesehen, dass die Auswerteeinheit zu dem jeweiligen Signalwertmuster oder zu der jeweiligen Einhüllenden die Symmetrieebene, insbesondere deren Lage relativ zur Längsmittelebene der Anhängekupplung, ermittelt.

Bei einer derartigen Ermittlung einer Symmetrieebene lässt sich insbesondere in einfacher Weise die relative Drehlage des Körpers im Bezug auf die Mittelachse der Kupplungskugel als Drehachse und die Längsmittelebene der Anhängekupplung als Referenz für den Drehwinkel ermitteln.

Aus diesem Grund ist vorzugsweise vorgesehen, dass die Auswerteeinheit aufgrund der Lage der Symmetrieebene relativ zu einer Längsmittelebene der Fahrzeugkarosserie oder der Anhängekupplung einen Winkel zwischen der Symmetrieebene des Körpers, insbesondere der Kupplung oder der Zugkugelkupplung, und der Längsmittelebene der Anhängekupplung ermittelt, so dass dadurch eine Drehlage des Körpers, insbesondere der Kupplung oder der Zugkugelkupplung relativ zur Längsmittelebene der Anhängekupplung in einfacher Weise ermittelt werden kann.

Weiter Merkmale und Vorteile der Erfindung sind Gegenstand der nachfolgenden Beschreibung sowie der zeichnerischen Darstellung einiger Ausführungsbeispiele.

### In der Zeichnung zeigen:

- Fig. 1: eine Ansicht eines Kraftfahrzeugs mit einer erfindungsgemäßen Anhängekupplung von hinten;
- Fig. 2: eine Seitenansicht des Kraftfahrzeugs in Richtung des Pfeils A in Fig. 1 mit teilweise im Bereich der Anhängekupplung weg geschnittener Karosserie;
- Fig. 3: eine Ansicht in Richtung des Pfeils B in Fig. 1;
- Fig. 4: eine Seitenansicht ähnlich Fig. 2 mit einem an der Anhängekupplung montierten Lastenträger;
- Fig. 5: eine Seitenansicht ähnlich Fig. 2 mit einem an der Anhängekupplung angehängten Anhängers;
- Fig. 6: eine vergrößerte Darstellung der Kupplungskugel in der Ansicht gemäß Fig. 2;
- Fig. 7: einen Schnitt längs Linie 7-7 in Fig. 6;

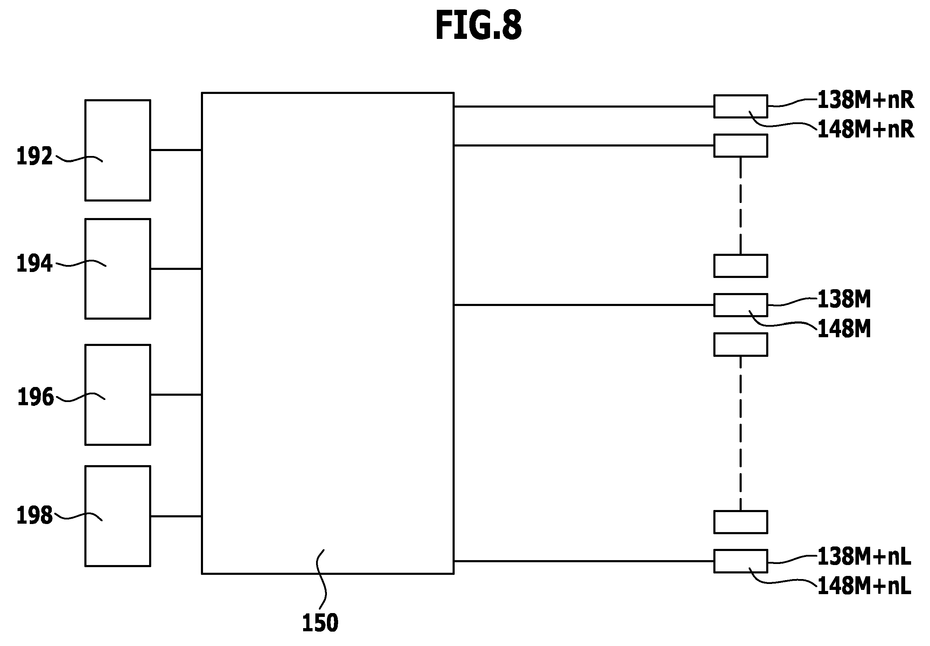

- Fig. 8: eine schematische Darstellung einer Auswerteeinheit, verbunden mit den Sensoreinheiten und weiteren Einheiten des Kraftfahrzeugs;
- Fig. 9: einen Schnitt entsprechend Fig. 7 im Fall einer an der Kupplungskugel angreifenden Kupplung eines Lastenträgers;
- Fig. 10: eine Darstellung von Signalwerten über dem jeweiligen Detektionsort im Fall der an der Kupplungskugel angreifenden Kupplung gemäß Fig. 9 mit dem daraus resultierenden detektionsortbezogenen Muster;
- Fig. 11: eine Darstellung einer Kupplungskugel mit einer an dieser Kupplungskugel angreifenden Zugkugelkupplung;
- Fig. 12: einen Schnitt längs Linie 12-12 in Fig. 11;
- Fig. 13: eine Darstellung ähnlich Fig. 10 des detektionsortbezogenen Musters der Signalwerte über den Detektionsorten im Fall der Zugkugelkupplung gemäß Fig. 12;

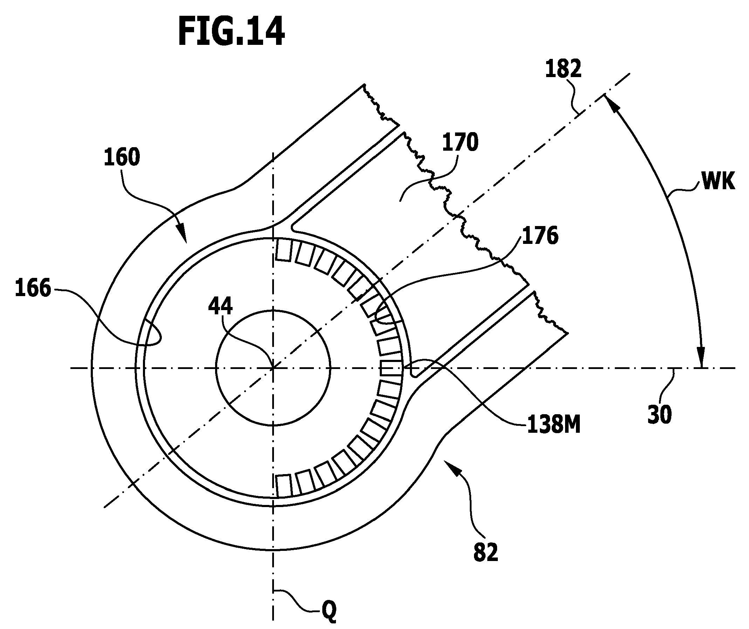

- Fig. 14: eine Darstellung ähnlich Fig. 12 der Zugkugelkupplung relativ zur Kupplungskugel bei Kurvenfahrt;
- Fig. 15: eine Darstellung des detektionsortbezogenen Musters bei Kurvenfahrt gemäß Fig. 14;
- Fig. 16: eine Darstellung eines zweiten Ausführungsbeispiels mit erfindungsgemäßen Sensoreinheiten integriert in einem Kugelkörper einer Kupplungskugel gemäß Fig. 6 und 7
- Fig. 17: eine Darstellung eines dritten Ausführungsbeispiels mit Sensoreinheiten ähnlich Fig. 16 bei einer Variante eines Kugelkörpers der Kupplungskugel;
- Fig. 18: eine Darstellung ähnlich Fig. 16 eines vierten Ausführungsbeispiels mit erfindungsgemäßen Sensoreinheiten;
- Fig. 19: eine vergrößerte Darstellung einer erfindungsgemäßen Sensoranordnung;
- Fig. 20: eine Darstellung ähnlich Fig. 16 eines fünften Ausführungsbeispiels mit erfindungsgemäßen Sensoreinheiten an einer weiteren Variante einer Kupplungskugel und
- Fig. 21: eine Darstellung eines detektionsortbezogenen Musters bei einer Verkippung des an der Kupplungskugel angreifenden Körpers um eine Längs- und/oder eine Querachse.

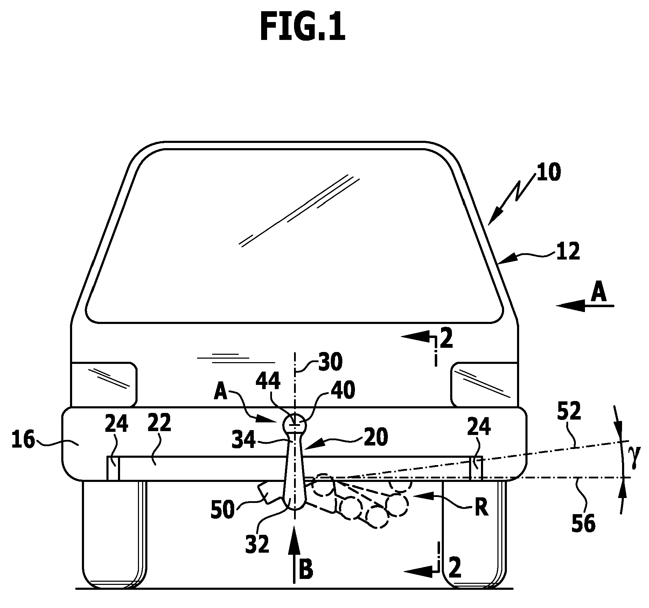

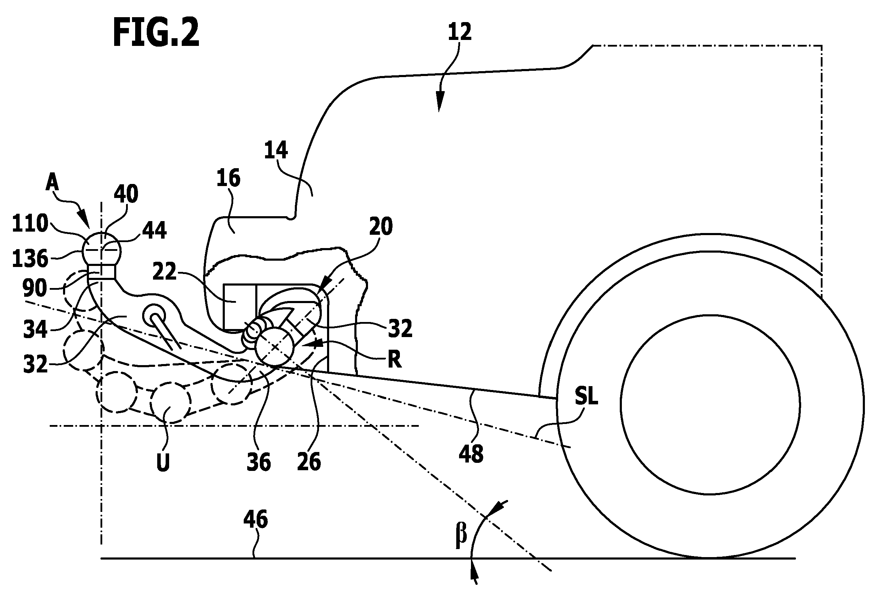

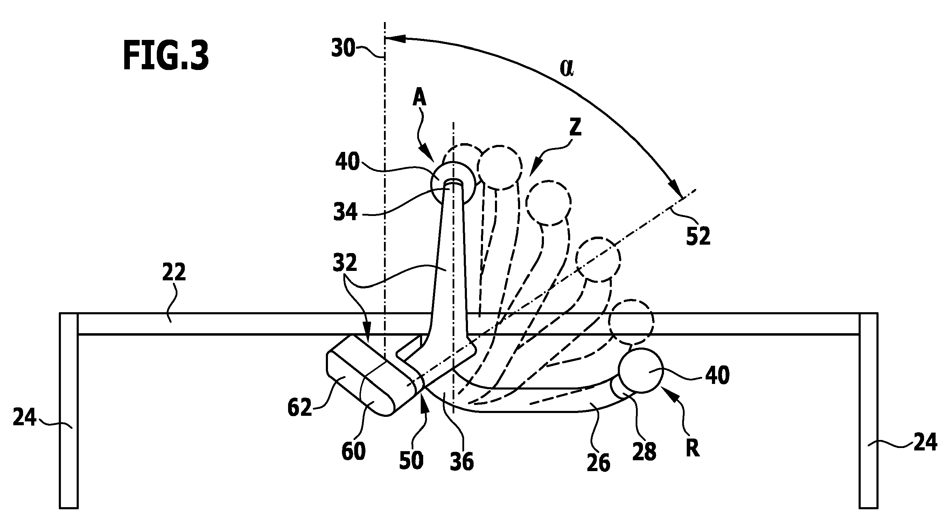

Ein in Fig. 1, 2 und 3 als Ganzes mit 10 bezeichnetes Kraftfahrzeug mit einer Kraftfahrzeugkarosserie 12 ist an einen Heckbereich 14 der Kraftfahrzeugkarosserie im Bereich einer hinteren Stoßfängereinheit 16 der Kraftfahrzeugkarosserie 12 mit einer Anhängekupplung 20 versehen.

Die Anhängekupplung 20 umfasst dabei einen Querträger 22, welcher über seitliche Längsträger 24 mit der Kraftfahrzeugkarosserie 12 verbunden ist, wobei sich die Längsträger 24 parallel zu einer Längsmittelebene 30 der Kraftfahrzeugkarosserie 12 erstrecken, während der Querträger 22 sich quer zur Längsmittelebene 30 der Kraftfahrzeugkarosserie 12 und parallel zu einem heckseitigen Ende 26 derselben erstreckt.

Die Anhängekupplung 20 umfasst ferner einen als Ganzes mit 32 bezeichneten Kugelhals, welcher an einem ersten Ende 34 eine mit 40 bezeichnete Kupplungskugel trägt, während ein zweites Ende 36 des Kugelhalses 32 beispielsweise mittels einer als Ganzes mit 50 bezeichneten Schwenklagereinheit an dem Querträger 22, so dass der Kugelhals 32 zwischen einer Arbeitsstellung A und einer Ruhestellung R schwenkbar gelagert ist.

Dabei ist der Kugelhals 32 mit der Kupplungskugel 40 in der Arbeitsstellung A zumindest im Bereich seines ersten Endes 34 symmetrisch zur Längsmittelebene 30 angeordnet und auch die Kupplungskugel 40 ist mit ihrer Mittelachse 44 in der Längsmittelebene 30 positioniert, so dass an die Kupplungskugel 40 ein Anhänger angehängt werden kann.

Damit stellt die Längsmittelebene 30 auch gleichzeitig die Längsmittelebene 30 der Anhängekupplung 20 dar.

Ferner ist der Kugelhals 32 mit der von diesem getragenen Kupplungskugel 40 durch die Schwenklagereinheit 50 in die Ruhestellung R verschwenkbar, in welcher der Kugelhals 32 zwischen dem Querträger 22 und dem heckseitigen Ende 26 der Kraftfahrzeugkarosserie 12 liegt, insbesondere auf einer einer Fahrbahn 46 abgewandten Seite einer die Stoßfängereinheit 16 berührenden Sichtlinie SL und vorzugsweise oberhalb einer von der Kraftfahrzeugkarosserie 12 und der Unterkante der Stoßfängereinheit 16 definierten und der Fahrbahn 46 zugewandten Unterbodenfläche 48.

Dabei bilden der Querträger 22 mit dem Längsträger 24 die Schwenklagereinheit 50 und der Kugelhals 32 zusammen einen Kupplungskugelträger 52 für die Kupplungskugel 40, der alternativ zu der beschriebenen Lösung auch so ausgebildet sein kann, dass der Kugelhals lösbar und abnehmbar oder auch starr mit dem Heckbereich 14 der Fahrzeugkarosserie 12 verbunden ist.

Grundsätzlich kann die Schwenklagereinheit 50 so ausgebildet sein, dass der Kugelhals 26 um mehrere Schwenkachsen verschwenkbar ist um diesen von der Arbeitsstellung A in die Ruhestellung R zu bewegen.

Bei dem in Fig. 1 bis 3 dargestellten vorteilhaften Ausführungsbeispiel, ist die Schwenklagereinheit 50 so ausgebildet, dass diese ein Verschwenken des Kugelhalses 26 um eine einzige Schwenkachse 54 vorsieht, welche schräg zur Quer- und schräg zur Längsmittelebene 30 verläuft, vorzugsweise in der in Fig. 1 dargestellten Projektion auf eine horizontale Ebene einen Winkel α mit der Längsmittelebene einschließt, der im Bereich zwischen 50 und 80 Grad liegt.

Ferner schließt die Schwenkachse 54 bei einer Projektion auf eine vertikale rechtwinklig zur Fahrzeuglängsmittelebene 30 verlaufende Ebene mit der horizontalen Ebene 56 einen Winkel γ ein, der zwischen 0 und 30 Grad liegt.

Zur Fixierung des Kugelhalses 26 in der Arbeitsstellung A und der Ruhestellung R ist die Schwenklagereinheit 50 mit einer als Ganzes mit 60 bezeichnete Verriegelungsvorrichtung vorgesehen, die nach verschiedensten Prinzipien arbeiten kann, jedoch stets in der Lage ist, den Kugelhals 32 in der Arbeitsstellung A und der Ruhestellung R unbeweglich relativ zur Schwenklagereinheit 50 und somit auch zum Querträger 22 und somit insgesamt zur Kraftfahrzeugkarosserie 12 festzulegen.

Ferner ist die Schwenklagereinheit 50 gegebenenfalls noch mit einer Antriebseinheit 62 versehen, mit welcher ein motorischer Antrieb der Schwenkbewegung um die Schwenkachse 54 realisierbar ist.

Alternativ zum Vorsehen der Antriebseinheit 62 ist es aber auch möglich, nach jeweiligem Lösen der Verriegelungsvorrichtung 60 ein manuelles Verschwenken zwischen der Arbeitsstellung A und der Ruhestellung R vorzusehen.

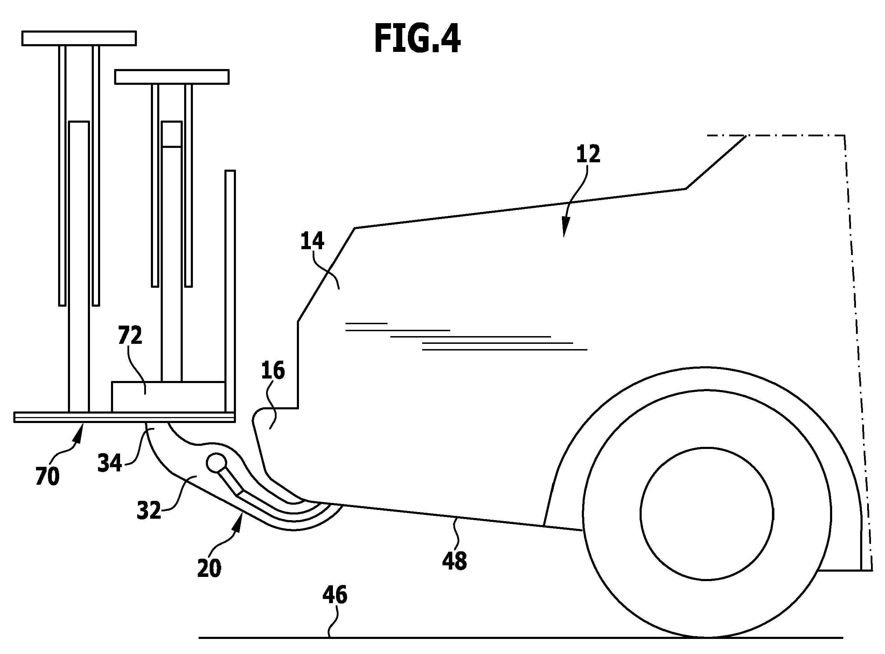

Wie in Fig. 4 dargestellt, dient eine derartige Anhängekupplung 20 beispielsweise dazu, um an der Fahrzeugkarosserie 12 einen Lastenträger 70 zu montieren, der mit einer Kupplung 72 versehen ist, welche einerseits die Kupplungskugel 40 aufnimmt und somit eine formschlüssige Fixierung im Bereich der Kupplungskugel 40 herstellt und andererseits zusätzlich noch entweder im Bereich der Kupplungskugel eine kraftschlüssige Verbindung mit dieser oder im Bereich des Kugelhalses 26 eine formschlüssige und/oder kraftschlüssige Verbindung mit diesem, insbesondere im Bereich des ersten Endes 34 eingeht, um den Lastenträger 70 insgesamt unbeweglich an dem Kugelhals 32 zu fixieren, wobei der Kugelhals 32 den gesamten Lastenträger 70 trägt und sämtliche Kipp-Momente, die vom Lastenträger 70 ausgehen, aufnimmt.

Ein derartiger Lastenträger 70 ist beispielsweise ein üblicher Lastenträger für Fahrräder, welche somit nahe des Heckbereichs 14 der Kraftfahrzeugkarosserie 12 transportiert werden können.

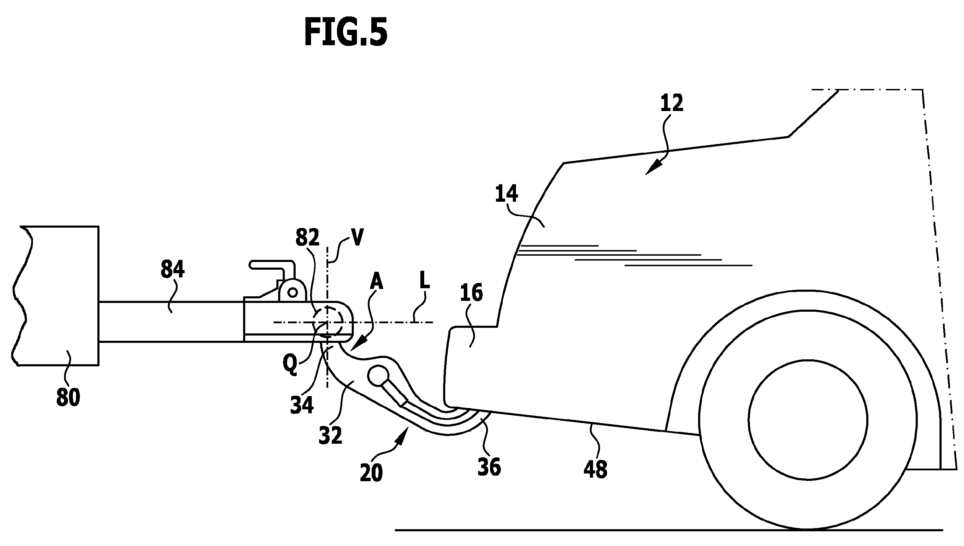

Wie in Fig. 5 dargestellt, dient eine derartige Anhängekupplung 20 aber auch dazu, einen in Fig. 5 schematisch angedeuteten Anhänger 80 zu ziehen, wobei der Anhänger 80 mit einer Zugkugelkupplung 82 an der Kupplungskugel 40 angreift und wobei die Zugkugelkupplung 82 an einem vorderen Ende einer Deichsel 84 des Anhängers 80 angeordnet ist.

Dabei bildet die Zugkugelkupplung 82 mit der Kupplungskugel 40 eine Zugverbindung ähnlich einem Kugelgelenk, so dass die Zugkugelkupplung 82 relativ zur Kupplungskugel 40 in der Arbeitsstellung A sowohl um eine in der Längsmittelebene 30 liegende Längsachse L, eine senkrecht auf der Längsmittelebene 30 stehende Querachse Q, die beide parallel zu einer horizontalen Ebene verlaufen, sowie um eine vertikale Achse V, die in der Längsmittelebene 30 liegt, schwenkbar ist.

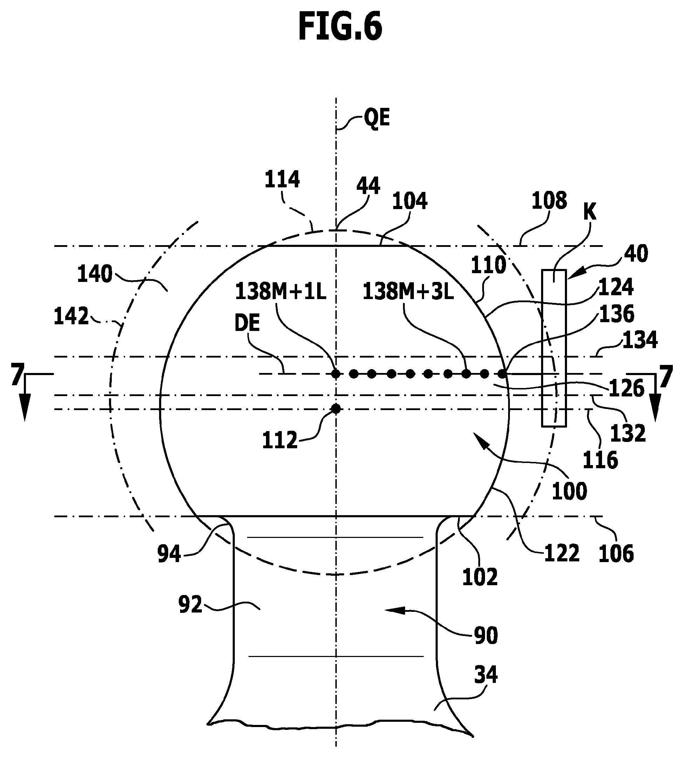

Wie in Fig. 6 dargestellt, umfasst eine erfindungsgemäße Kupplungskugel 40 einen sich an das erste Ende 34 des Kugelhalses 32 anschließenden Kugelansatz 90, welcher eine zylindrisch zu der Mittelachse 44 der Kupplungskugel 40 verlaufende zylindrische Mantelfläche 92 aufweist, die mit einer Rundung 94 in einen Kugelkörper 100 übergeht, welcher sich ausgehend von einer unteren, senkrecht zur Mittelachse 44 verlaufenden unteren Endfläche 102 bis zu einer oberen Endfläche 104 erstreckt.

Dabei ist die untere Endfläche 102 vorzugsweise eine die Rundung 94 beim Übergang von der zylindrischen Mantelfläche 92 des Kugelansatzes 90 zum Kugelkörper 100 umschließende Ringfläche, welche in einer, senkrecht zur Mittelachse 44 verlaufenden unteren geometrischen Ebene 106 liegt, während die obere Endfläche 104 in einer senkrecht zur Mittelachse 44 verlaufenden oberen geometrischen Ebene 108 liegt, so dass die Ebenen 106 und 108 parallel zueinander verlaufen.

Ferner ist der Durchmesser der oberen Endfläche 104 geringer als der Durchmesser der zylindrischen Mantelfläche des Kugelansatzes 90.

Zwischen der unteren Endfläche 102 und der oberen Endfläche 104 weist der Kugelkörper 100 eine Kugeloberfläche 110 auf, welche einen Kugelflächenabschnitt einer um einen Mittelpunkt 112 verlaufenden Kugelfläche 114 darstellt, wobei der Mittelpunkt 112 auf der Mittelachse 44 liegt und die Kugeloberfläche 110 lediglich den Teil der Kugelfläche 114 umfasst, der zwischen der unteren geometrischen Ebene 106 und der oberen geometrischen Ebene 104 liegt.

Ferner weist der Mittelpunkt 112 einen geringeren Abstand von der unteren Ebene 106 auf als von der oberen Ebene 108, so dass eine zu den einander parallelen Ebenen 106 und 108 ebenfalls parallele Äquatorialebene 116 die Kugeloberfläche 110 in eine untere Kugelzone 122 aufteilt, die zwischen der unteren Ebene 106 und der Äquatorebene 116 liegt und eine obere Kugelzone 124, die zwischen der Äquatorebene 116 und der oberen Ebene 108 liegt.

Sowohl die untere Kugelzone 122 als auch die obere Kugelzone 124 verlaufen rotationssymmetrisch um die Mittelachse 44 und stellen somit Bereiche der Kugeloberfläche 110 dar.

Bei der erfindungsgemäßen Anhängekupplung 20 weist der Kugelkörper 100 eine Sensorzone 126 auf, die vorzugsweise in der oberen Kugelzone 124 liegt zwar nahe der Äquatorebene 116.

Vorzugsweise liegt dabei die Sensorzone 126 zwischen einer unteren Begrenzungsebene 132 und einer oberen Begrenzungsebene 134, die ebenfalls senkrecht zur Mittelachse 44 und somit parallel zu der unteren Ebene 106, der oberen Ebene 108 und der Äquatorialebene 116 verlaufen, wobei die untere Begrenzungsebene 132 und die obere Begrenzungsebene 134 einen Abstand voneinander aufweisen, der im Bereich von 4 mm bis 8 mm liegt.

Vorzugsweise liegt die untere Begrenzungsebene 132 der Sensorzone 126 in einem Abstand von der Äquatorialebene 116, der im Bereich von 0,5 bis 4 mm, vorzugsweise 1 bis 3 mm, liegt.

Die Sensorzone 126 kann sich beispielsweise rotationssymmetrisch um die Mittelachse 44 herum erstrecken.

Die Sensorzone 126 kann sich aber auch lediglich in einem dem Heckbereich 14 der Kraftfahrzeugkarosserie 12 abgewandten rückwärtigen Oberflächenbereich 136 der Kugeloberfläche 110 liegen.

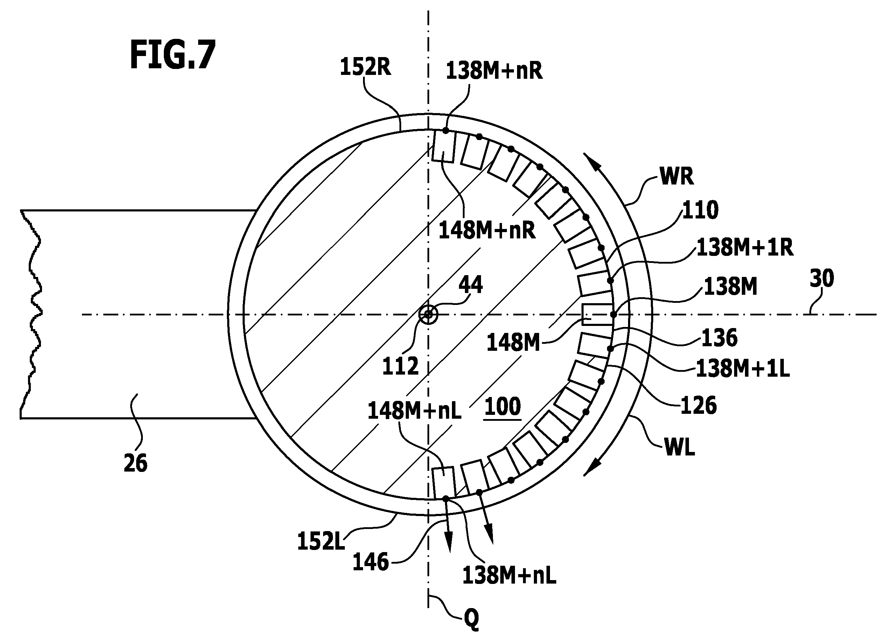

Die Sensorzone 126 erstreckt sich beispielsweise beiderseits der Längsmittelebene 30 um die Mittelachse 44 herum jeweils über einen Winkelbereich WL und WR, der ausgehend von der Längsmittelebene 30 unterschiedliche groß gewählt werden kann, beispielsweise, wie in Fig. 7 dargestellt, 90° beträgt, so dass sich die Sensorzone 126 jeweils beiderseits der Längsmittelebene 30 bis zu einer Querebene Q erstreckt, die durch die Mittelachse 44 und senkrecht zur Längsmittelebene 30 verläuft.

In dieser Sensorzone 126 liegen einzelne stationär relativ zum Kugelkörper 100 und somit auch stationär zur Kupplungskugel 40 angeordnete Detektionsorte 138, wobei beispielsweise ausgehend von einem in der Längsmittelebene 30 liegenden Detektionsort 138M in Richtung WL die Detektionsorte 138M+1L bis 138M+nL folgen, während in der Richtung R auf den Detektionsort 138M die Detektionsorte 138M+1R bis 138M+nR folgen.

Die Detektionsorte 138 sind dabei geometrische Orte, an welchen eine Detektion eines Körpers K erfolgen kann, der innerhalb eines Nahbereichs 140 über der Kugeloberfläche 110 liegt, wobei der Nahbereich 140 durch eine geometrische Kugelfläche 142 definiert ist, die einen Radius aufweist, der maximal 1 cm, noch besser maximal 0,5 cm größer ist, als der Radius der die Kugeloberfläche 110 festlegenden Kugelfläche 114.

Beispielsweise liegen die Detektionsorte 138 alle in einer senkrecht zur Mittelachse 44 verlaufenden Detektionsebene DE.

Vorzugsweise erfolgt dabei eine Detektion des Körpers K entweder über Ultraschall oder über Magnetfeldsensoren an den jeweiligen Detektionsorten 138.

Um eine Detektion des Körpers K selektiv an den einzelnen Detektionsorten 138 vornehmen zu können, sind, wie in Fig. 7 dargestellt, in dem Kugelkörper 100 an den Detektionsorten 138 stationär angeordnete Sensoreinheiten 148 vorgesehen, die im Kugelkörper 100 und zwar nahe oder angrenzend an die Detektionsorte 138 sitzen und dabei an dem jeweiligen Detektionsort 138 mit einer radial zum Mittelpunkt 112 der Kugeloberfläche 110 gerichteten Detektionsrichtung 146 erfassen, ob sich an dem jeweiligen Detektionsort 138 im Nahbereich 140 ein Körper K befindet oder nicht.

Zur Auswertung von Signalen der Sensoreinheiten 148 ist diesen eine Auswerteeinheit 150 zugeordnet, welche die Signale aller Sensoreinheiten 148 erfasst und somit in der Lage ist, zu erfassen, an welchem der Detektionsorte 138 ein Körper K im Nahbereich 140 über der Kugeloberfläche 110 vorhanden ist oder nicht und je nach Vorhandensein oder Nichtvorhandensein des Körpers K ein Signal SK erzeugen.

Durch die in der Sensorzone 126 angeordneten Detektionsorte 138, ist beispielsweise dann, wenn sich die Sensorzone 126 bis zur Querebene QE erstreckt, die Auswerteeinheit 150 in der Lage, zu erfassen, ob ein Körper K an den Detektionsorten 138, die beispielsweise nahe der Querebene Q, also in Seitenbereichen 152 L,R vorhanden ist, wobei dies durch die Sensoreinheiten 148 M+nR und M+nL erfolgen würde, oder ob ein Körper K zwischen den Seitenbereichen 152L und 152R vorhanden ist, beispielsweise nahe der Längsmittelebene 30, wobei dies durch die Sensoreinheit 148M erfasst würde oder auch durch die dazwischenliegenden Sensoren 148.

Das heißt, dass die Auswerteeinheit 150 in der Lage ist, zu erkennen, mit welcher geometrischen Ausdehnung oder in welchem Umfang sich ein Körper K im über der Sensorzone 126 liegenden Nahbereich 140 erstreckt.

Damit besteht die Möglichkeit, zu erkennen, ob die Kupplung 72 beispielsweise eines Lastenträgers 70 an der Kugeloberfläche 110 angreift oder ob die Zugkugelkupplung 82 des Anhängers 80 an der Kugeloberfläche 110 angreift.

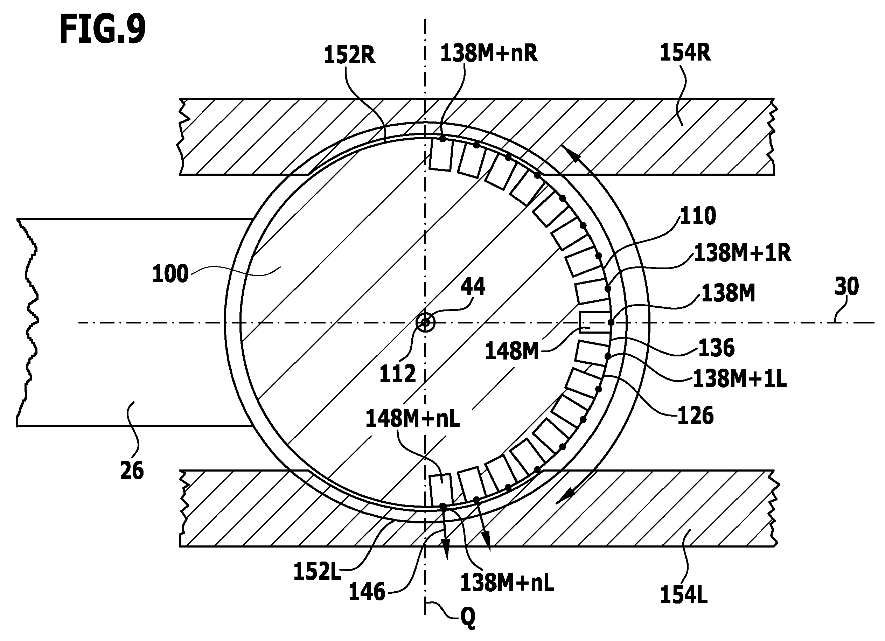

Erfolgt beispielsweise, wie in Fig. 9 dargestellt, ein Einklemmen des Kugelkörpers 100 durch seitlich anliegende Klemmpfannen 154_{L} und 154_{R}, so werden die Klemmpfannen 154 an den Detektionsorten 138 M+nL, bis 138 M+(n-4)L und 138 M+nR bis 138 M+(n-4)R und die entsprechenden Sensoreinheiten 148 erfasst, so dass die Auswerteeinheit 150 erkennen kann, dass beispielsweise eine Kupplung 72 mit den seitlichen Klemmbacken 154_{L} und 154_{R} an dem Kugelkörper 100 angreift.

In diesem Fall erkennt die Auswerteeinheit 150, dass an den Detektionsorten 138 M+nL bis 138 M+(n-4)L und 138 M+nR bis 138 M+(n-4)R ein Körper K, nämlich die jeweilige Klemmpfanne 154, vorhanden ist, während an den übrigen Detektionsorten 138 kein Körper K vorhanden ist.

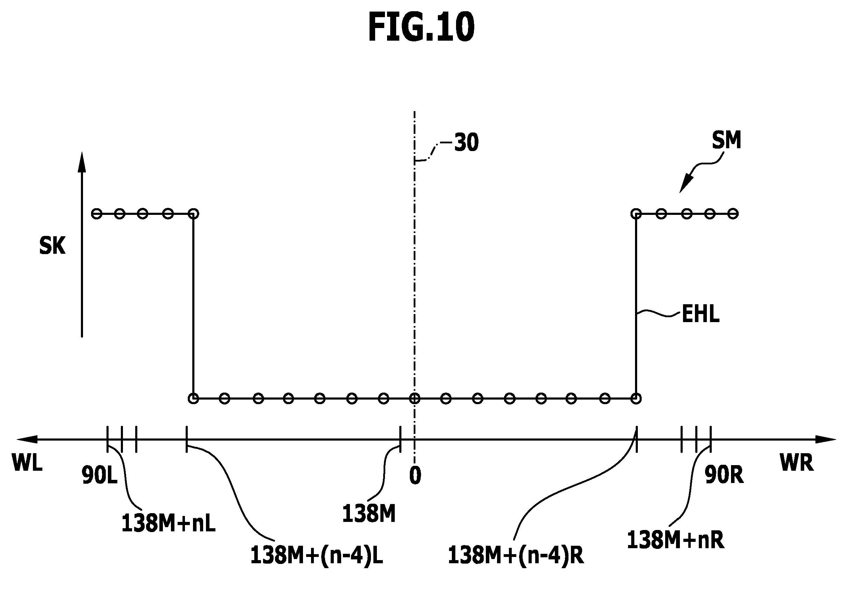

Dies führt, wie in Fig. 10 dargestellt, zu einem charakteristischen Singalwertmuster SM aus über dem jeweiligen Winkelbereich WL und WR aufgetragenen von der Auswerteeinheit 150 erfassten Signalwerten SK, die an den Detektionsorten 138, an denen die Klemmpfannen 154 erfasst werden, beispielsweise größer sind als an den Detektionsorten 138, an denen kein Körper K erfasst wird. Durch das Signalwertmuster SM der über den Winkelbereichen WL und WR aufgetragenen Signalwerte SK kann durch die Auswerteeinheit 150 eine Einhüllende EHL gelegt werden, die dann eine zur Längsmittelebene 30 symmetrische Form aufweist.

Ob die Signalwerte bei Vorhandensein eines Körpers K hoch und bei Nichtvorhandensein des Körpers K niedrig sind oder umgekehrt, hängt von der Arbeitsweise der Sensoreinheiten 148 ab.

Somit kann die Auswerteeinheit 150 die ermittelte Einhüllende EHL mit abgespeicherten Referenzeinhüllenden vergleichen und dadurch erkennen, dass die Anhängerkupplung 20 den Lastenträger 70 trägt.

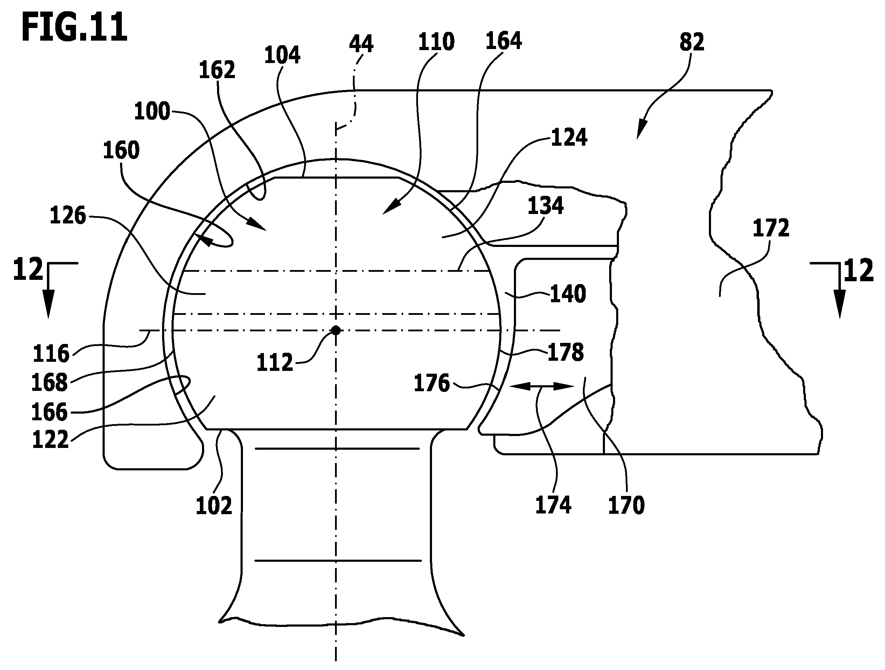

Im Gegensatz zur Kupplung 72 liegt die Zugkugelkupplung 82, wie in Fig. 11 dargestellt, an dem Kugelkörper 100 mit einer Kugelaufnahme 160 an, wobei die Kugelaufnahme 160 einerseits eine Tragpfanne 162 umfasst, die auf der oberen Kugelzone 124 der Kugeloberfläche im Bereich einer über der oberen Begrenzungsebene 134 der Sensorzone 126 liegenden Tragzone 164 der Kugeloberfläche 110 anliegt, und außerdem umfasst die Kugelaufnahme 160 noch eine Zugpfanne 166, die an der Kugeloberfläche 110 in einem in Zugrichtung vorderen Oberflächenbereich 168 anliegt, der bei Geradeausfahrt dem Heckbereich 14 der Kraftfahrzeugkarosserie 12 zugewandt ist, bei Kurvenfahrt jedoch in Richtung der Querebene Q wandert.

Der Oberflächenbereich 168 an dem die Zugpfanne 166 anliegt, erstreckt sich dabei unterhalb der Tragzone 164, beispielsweise im Anschluss an die Tragzone 164, im Bereich der oberen Kugelzone 124 bis zur Äquatorebene 116 und über die Äquatorebene 116 hinweg in den Bereich der unteren Kugelzone 122, gegebenenfalls bis zur unteren Endfläche 102.

Außerdem erfolgt die Fixierung der Kugelaufnahme 160 an dem Kugelkörper 100 durch ein relativ zur Kugelaufnahme 160 bewegbares Verschlusselement 170, welches durch eine an der Kugelaufnahme 160 angeordnete Verschlusseinrichtung 172, beispielsweise parallel zu einer Richtung 174, auf den Kugelkörper 100 zu- oder von diesem weg bewegbar ist, wobei das Verschlusselement 170 mit einer Anlagefläche 176 zumindest an einer Verschlussanlagezone 178 der unteren Kugelzone 122 der Kugeloberfläche 110 anlegbar ist, um insgesamt ein Lösen der Kugelaufnahme 160, insbesondere ein Abheben der Kugelaufnahme 160, von dem Kugelkörper 100 zu verhindern.

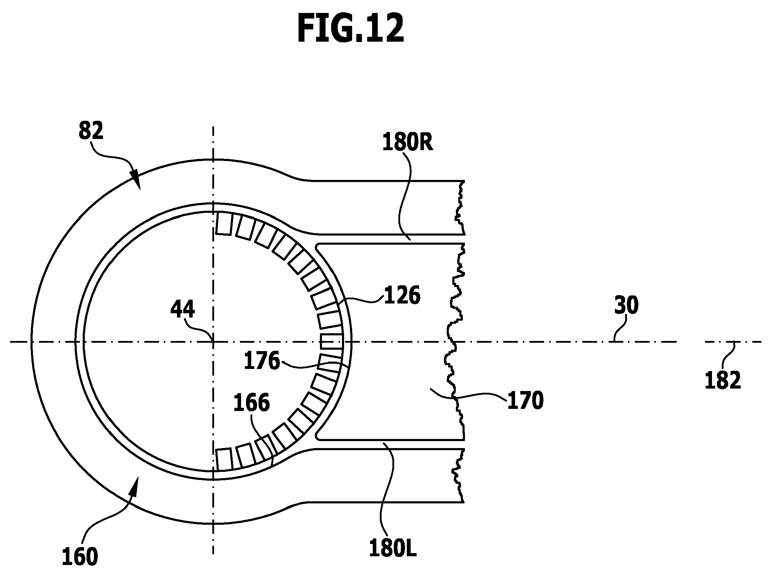

Dabei erstreckt sich das Verschlusselement 170 vorzugsweise über die Äquatorebene 116 hinweg und verläuft nicht unbedingt anliegend, bis zu der Sensorzone 126 innerhalb des Nahbereichs 140 der Sensorzone 126, so dass an den Detektionsorten 138 der Sensorzone 126, wie in Fig. 12 dargestellt, einerseits die Signalwerte SK bedingt durch die Zugpfanne 166 und andererseits die Signalwerte SK bedingt durch das Verschlusselement 170 mit der Anlagefläche 176, erzeugt werden und dass darüber hinaus die Möglichkeit besteht, zur Bewegung des Verschlusselements 170 relativ zur Kugelaufnahme 160 erforderliche Spalte 180L und 180R zwischen dem Verschlusselement 170 und der Kugelaufnahme 160 an den der Lage der Spalte 180L und 180R entsprechenden Detektionsorten 138 zu erfassen, solange sich die Anlagefläche 176 um die Mittelachse 44 herum innerhalb der Sensorzone 126 erstreckt.

Da die Zugkugelkupplung 82 eine Längsmittelebene 182 als Symmetrieebene SE aufweist und sowohl die Zugpfanne 166 als auch das Verschlusselement 170 symmetrisch zu der Längsmittelebene 182 angeordnet sind, fällt die Längsmittelebene 182 der Zugkugelkupplung 82 mit der Längsmittelebene 30 der Kraftfahrzeugkarosserie 12 und der Anhängerkupplung 20 dann zusammen, wenn das Kraftfahrzeug 10 exakt geradeaus fährt. Diese Situation ist in Fig. 12 dargestellt.

Bei Geradeausfahrt, wie in Fig. 12 dargestellt, ergeben sich beispielsweise hohe Signalwerte SK an den Detektionsorten 138, die die Zugpfanne 166 erfassen, und hohe Signalwerte SK an den Detektionsorten 138, welche das Verschlusselement 170 mit der Anlagefläche 176 erfassen, jedoch niedrige Signalwerte SK an den Detektionsorten 138, die die Spalte 180 zwischen dem Verschlusselement 170 und der Kugelaufnahme 160 erfassen, so dass ebenfalls ein charakteristisches Signalwertmuster SM von der Auswerteeinheit 150 erfasst werden kann.

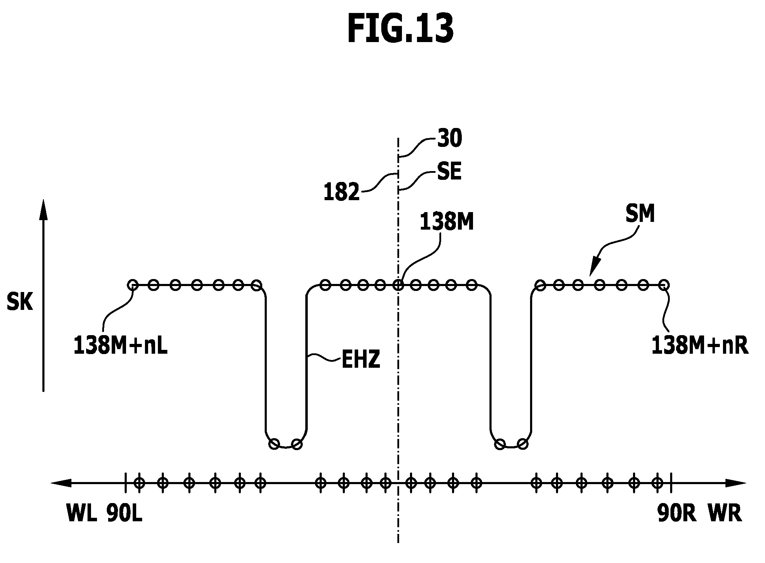

Legt man durch diese gemessenen Signalwerte SK eine Einhüllende EHZ, so ist diese bei Geradeausfahrt symmetrisch zur Längsmittelebene 30, wie in Fig. 13 dargestellt, wobei die Symmetrieebene SE mit der Längsmittelebene 30 zusammenfällt.

Die Einhüllende EHZ lässt sich beispielsweise aus vorgegebenen Funktionen durch Anpassung von deren Parameter so bestimmen, dass die Abweichung der errechneten Einhüllenden EHZ von den ermittelten Signalwerten SK minimal ist.

Außerdem lässt sich insbesondere durch geeignete Vorgabe der Funktionen festlegen, dass die Einhüllende EHZ zu einer Symmetrieebene SE symmetrisch sein soll, wobei die Symmetrieebene SE der Einhüllenden EHZ bei Geradeausfahrt mit der Längsmittelebene 30 zusammenfällt.

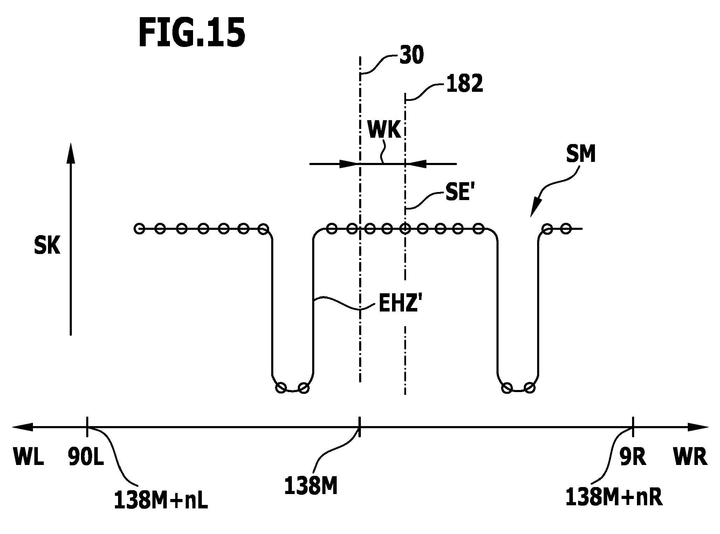

Erfolgt allerdings eine Kurvenfahrt, so ist die Zugkugelkupplung 82 mit ihrer Längsmittelebene 182 relativ zur Längsmittelebene 30 um die Mittelachse 44 verdreht angeordnet, so dass auch an den Detektionsorten 138 Signale gemessen werden, die, wie in Fig. 15 dargestellt, zu einer Einhüllenden EHZ' führen, welche gegenüber der Lage der Längsmittelebene 30, definiert durch den Detektionsort 138M, zu einer Seite, beispielsweise zur rechten Seite hin verschoben ist.

Aus der Verschiebung der Einhüllenden EHZ' bezogen auf die Längsmittelebene 30 und der Ermittelung der zu der Einhüllenden EHZ' gehörenden Symmetrieebene SE, die der Lage der Längsmittelebene 182 entspricht, lässt sich somit die Verdrehung der Zugkugelkupplung 82 mit der Längsmittelebene 182 relativ zur Längsmittelebene 30 aus der Winkeldifferenz zwischen der Lage der Längsmittelebene 30 und der Lage der Symmetrieebene SE bestimmen, wobei dabei die Auswerteeinheit 150 in der Lage ist, direkt den Winkel WK zwischen der Längsmittelebene 182 und der Längsmittelebene 30 der Fahrzeugkarosserie 12 zu ermitteln, und zwar ohne dass ein Eichvorgang oder ein Lernvorgang erforderlich wäre, da die Detektionsorte 138 alle relativ zum Kugelkörper 100 stationär und somit auch stationär relativ zur Längsmittelebene 30 angeordnet sind.

Damit besteht die Möglichkeit, den Winkel WK zwischen der Zugkugelkupplung 82 und der Längsmittelebene 30 der Anhängekupplung 20 mittels der Auswerteeinheit 150 absolut zu ermitteln.

Ein derartiger von der Auswerteeinheit 150 absolut ermittelter Winkel WK kann für unterschiedlichste Fahrzeugfunktionen verwendet werden.

Beispielsweise besteht die Möglichkeit, die Informationen über den Winkel zwischen der Längsmittelebene 30 der Fahrzeugkarosserie 12 und der Längsmittelebene 182 der Zugkugelkupplung 82 einer Fahrdynamikerfassungseinheit 192 zu übermitteln, die beispielsweise aus dem Winkel WK und beispielsweise noch einer zeitlichen Änderung des Winkels WK Schlingerbewegungen erfassen kann und entsprechende Reaktionen im Fahrzeug auslösen kann.

Es besteht aber auch die Möglichkeit, dass die Auswerteeinheit 150 die Informationen über den Winkel WK zwischen der Längsmittelebene 30 der Anhängekupplung 20 und der Längsmittelebene 182 der Zugkugelkupplung 82 einer Rückfahrsteuerung 194 übermittelt, welche beispielsweise in Verbindung mit einer elektronischen Lenkung in der Lage ist, ein Rückwärtsfahren des Kraftfahrzeugs 10 mit dem Anhänger 80 zu steuern, wobei insbesondere bei einachsigen Anhängern 80 dem Fahrzeuglenker komplexe Lenkbewegungen abgenommen werden können.

Es besteht aber auch die Möglichkeit, die Auswerteeinheit 150 mit einer Visualisierungseinheit 196 zu koppeln, die in der Lage ist, die Winkelstellung des Anhängers 80 relativ zur Kraftfahrzeugkarosserie 12 zu visualisieren und/oder die Länge eines Anhängers zu ermitteln und gegebenenfalls zu visualisieren.

Darüber hinaus besteht auch noch die Möglichkeit, die Auswerteeinheit 150 mit einer Sicherheitseinheit 198 zu koppeln, welche damit in der Lage ist, neben den verschiedensten Winkelstellungen der Zugkugelkupplung 82 relativ zur Längsmittelebene 30 auch noch durch Vergleich der jeweils erfassten Signalwertmuster SM oder Einhüllenden mit als Referenz abgespeicherten Signalwertmustern oder Referenzeinhüllenden die ständige Präsenz und den Angriff der Zugkugelkupplung 82 an der Kupplungskugel 100 zu erfassen, da bei diesem Angreifen der Zugkugelkupplung 82 an der Kupplungskugel 100 ein charakteristisches Signalwertmuster SM oder eine charakteristische Einhüllende EHZ ermittelt werden kann, die bei Nichtexistent eines an dem Kugelkörper 100 angreifenden Körpers K signifikant, beispielsweise von der herangezogenen Einhüllenden EHL oder der Einhüllenden EHZ abweicht.

Die Sicherheitseinheit 198 kann damit die Präsenz des Körpers K, beispielsweise der Kupplung 72 des Lastenträgers 70 oder die Präsenz der Zugkugelkupplung 82 des Anhängers 80, nicht nur während der Fahrt überprüfen, sondern alternativ oder ergänzend beispielsweise auch im Stillstand und somit als Diebstahlwarnung eingesetzt werden.

Im Zusammenhang mit der bisherigen Beschreibung der erfindungsgemäßen Lösung wurden noch keine konkretisierten Ausführungsbeispiele für die Ausbildung der Sensoreinheiten erläutert.

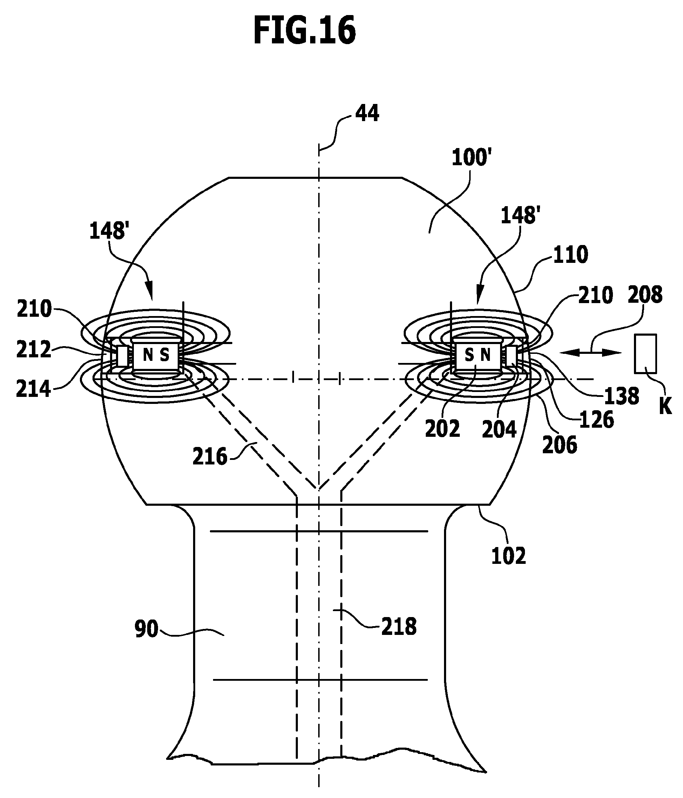

Ein zweites Ausführungsbeispiel von erfindungsgemäßen Sensoreinheiten 148' umfasst, wie in Fig. 16 dargestellt, beispielsweise für jede Sensoreinheit 148' einen Permanentmagnet 202, welcher mit seinem Nord- und Südpol N, S so angeordnet ist, dass diese in radialer Richtung zur Mittelachse 44 aufeinanderfolgend angeordnet sind.

Liegt beispielsweise, wie in Fig. 16 dargestellt, der Nordpol N bezogen auf den Südpol S radial außen, so ist unmittelbar vor dem Nordpol N ein Magnetfeldsensor 204 angeordnet, vorzugsweise ein Hallsensor, welcher zumindest von einem Teil der vom Nordpol N wegführenden Feldlinien 206 des Magnetfeldes durchsetzt ist.

Diese Anordnung von Permanentmagnet 202 und Magnetfeldsensor 204 weist damit eine Detektionsrichtung 208 auf, die radial zur Mittelachse 44 gerichtet ist, so dass ein Annähern eines metallischen magnetisierbaren Körpers K in der Detektionsrichtung 208 zu einer Veränderung des Verlaufs der magnetischen Feldlinien 206 und somit zu einer Änderung des magnetischen Flusses durch den Magnetfeldsensor 204 führt.

Diese Veränderung des magnetischen Flusses durch den Magnetfeldsensor 204 führt zu einem von der Auswerteeinheit erfassten Signalwert SK. Bei dem in Fig. 16 dargestellten ersten Ausführungsbeispiel der Sensoreinheit 148' sitzt der zu dieser Sensoreinheit 148' gehörende Permanentmagnet 202 mit dem Magnetfeldsensor 204 in einer der Kugeloberfläche 110 im Bereich der Sensorzone 126 vorgesehenen Ausnehmung 210 im Kugelkörper 100, wobei zwischen dem Magnetfeldsensor 204 und der Kugeloberfläche 110 im Bereich der Sensorzone 126 noch eine Schutzabdeckung 212 vorgesehen ist, welche vorzugsweise aus einem nicht magnetisierbaren Material besteht und die Ausnehmung 210 verschließt, wobei eine Außenfläche der Schutzabdeckung 212 an die Kugeloberfläche 110 angepasst ist und im Bereich der Ausnehmung 210 der Kugelkörper 100 dahingehend ergänzt, dass die Kugeloberfläche 110 im Bereich der Ausnehmung 210 keine Unterbrechung oder Inhomogenität aufweist.

Bei dem in Fig. 16 dargestellten zweiten Ausführungsbeispiel ist für jede Sensoreinheit 148' an jedem Detektionsort 138 eine Ausnehmung im Kugelkörper 100 vorgesehen, die beispielsweise als radial zur Mittelachse 44 ausgeführte und von der Kugeloberfläche 110 in den Kugelkörper 100 eindringende Bohrung ausgeführt ist.

Bei dem zweiten Ausführungsbeispiel von erfindungsgemäßen Sensoreinheiten 148' ist zur elektrischen Verbindung der jeweiligen Sensoreinheit 148' mit der Auswerteeinheit ausgehend von jeder Ausnehmung 210 eine in Richtung der unteren Endfläche 102 und in einem spitzen Winkel zur Mittelachse 44 verlaufende Schrägbohrung 216 vorgesehen, wobei alle Schrägbohrungen 216 aus allen Ausnehmungen 210 in einen Zentralkanal 218 münden, der den Kugelansatz 90 koaxial zur Mittelachse 44 durchsetzt und bis zu den Schrägbohrungen 216 reicht.

Alternativ zu den Schrägbohrungen 216 ist es aber auch denkbar, ausgehend von der jeweiligen Ausnehmung 210, eine im Wesentlichen radial zur Mittelachse 44 verlaufende Bohrung vorzusehen, die dann ebenfalls in den Zentralkanal 218 mündet, wobei der Zentralkanal 218 nicht nur den Kugelansatz 90 durchsetzt, sondern bis in den Kugelkörper 100 reicht.

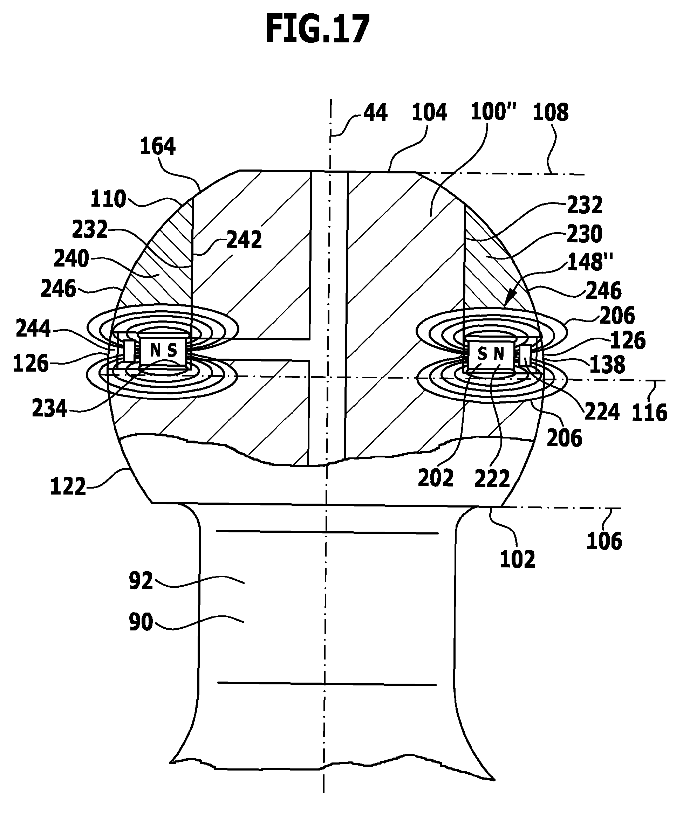

Bei einem dritten Ausführungsbeispiel mit einer Vielzahl von erfindungsgemäßen Sensoreinheiten 148", dargestellt in Fig. 17, ist nicht für jede Sensoreinheit 148"ein einzelner Permanentmagnet 202 vorgesehen, sondern es ist ein um die Mittelachse 44 umlaufender Ring 222 aus Permanentmagneten vorgesehen, wobei der Ring 222 bezogen auf die Mittelachse 44 radial außenliegend beispielsweise einen Nordpol N und radial innenliegend beispielsweise einen Südpol S aufweist.

An dem jeweils vorgesehenen Detektionsort 138 ist bezogen auf die Mittelachse 44 radial außenliegend an dem Ring 222 jeweils der Magnetfeldsensor 224 vorgesehen, wobei die Magnetfeldsensoren 224 ebenfalls vorzugsweise Hallsensoren sind.

Die Magnetfeldsensoren 224 können dabei beispielsweise an dem Ring 222 fixiert sein.

Um den Ring 222 am Kugelkörper 100" montieren zu können, ist vorzugsweise der Kugelkörper 100" mit einer Ausnehmung 230 versehen, die rings um die Mittelachse 44 umlaufend ausgebildet ist und beispielsweise eine zur Mittelachse 44 zylindrisch verlaufende Innenwand 232 aufweist, sowie einen Boden 234, der beispielsweise senkrecht zur Mittelachse 44 als Kreisringfläche umlaufend ausgebildet ist.

Somit bildet die Ausnehmung 230 eine um die Mittelachse 44 umlaufende stufenförmige Ausnehmung, die beispielsweise im Bereich der Sensorzone 126 liegt, so dass der Kugelkörper 100 selbst nach wie vor die Tragzone 164 und die untere Kugelzone 122 der Kugeloberfläche 110 aufweist.

Die Ausnehmung 230 wird verschlossen durch einen Ringkörper 240, welcher sich beispielsweise mit einer Innenfläche 242 an der Innenwand abstützt und einen Schutzring 244 bildet, welcher zwischen den Magnetfeldsensoren 224 und der Kugeloberfläche 110 im Bereich der Sensorzone 126 liegt.

Beispielsweise stützt sich der Ringkörper 240 mit dem Schutzring 244 auf dem Boden 234 der Ausnehmung 230 ab.

Ferner hat der Ringkörper 240 seinerseits eine Ausnehmung, die es erlaubt, den Ring 222 der Permanentmagnete und die Magnetfeldsensoren 224 aufzunehmen, die beispielsweise über dem Boden 234 der Ausnehmung 230 angeordnet sind.

Ferner bildet der Ring 240 eine Außenfläche 246, welche im Bereich der Ausnehmung 230 den Kugelkörper 100" derart ergänzt, dass die Kugeloberfläche 110 von der unteren Endfläche 102 bis zur oberen Endfläche 104 durchgehend und ungestört verläuft.

Beispielsweise ist der Ringkörper 240 ein Körper aus einem nicht magnetisierbaren Material, beispielsweise Aluminium, welcher an seiner Außenfläche 246 eine ausreichende Festigkeit im Bereich der Kugeloberfläche 110 aufweist, andererseits die magnetischen Feldlinien 206 nicht beeinflusst.

Im Übrigen sind bei dem dritten Ausführungsbeispiel all diejenigen Elemente, die mit denselben Bezugszeichen versehen sind wie das erste Ausführungsbeispiel mit diesen identisch, so dass hinsichtlich der Beschreibung vollinhaltlich auf die Ausführungen zu diesen im Zusammenhang mit dem ersten Ausführungsbeispiel verwiesen werden kann.

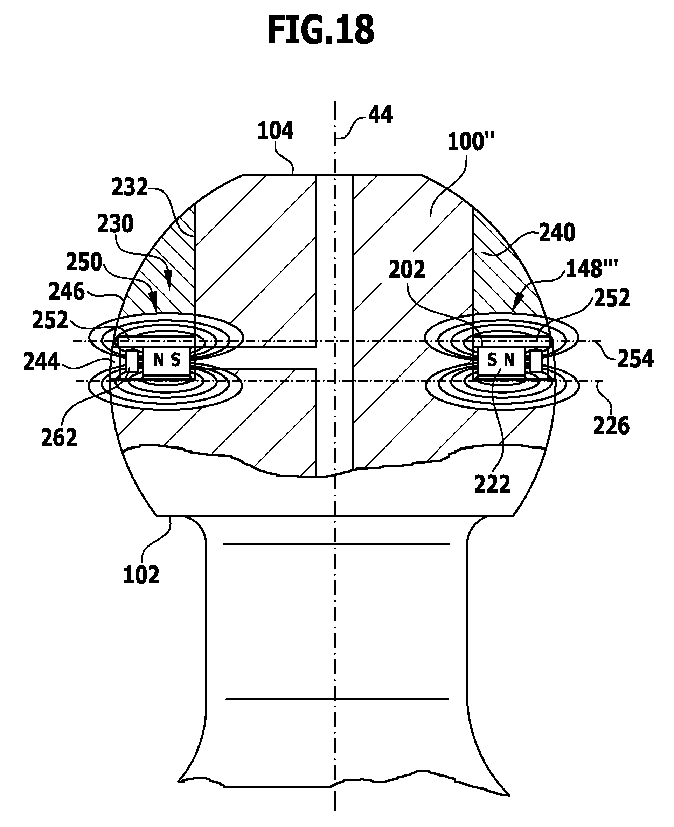

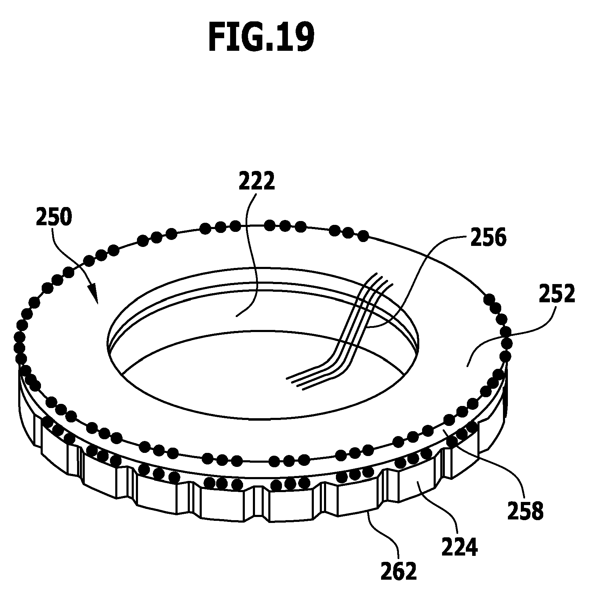

Bei einem vierten Ausführungsbeispiel, dargestellt in Fig. 18 und 19, sind die einzelnen Sensoreinheiten 148"' zu einer Sensoranordnung 250 zusammengefasst, die die einzelnen Sensoreinheiten 148" umfasst.

Beispielsweise ist bei dieser Sensoranordnung 250 eine Trägerplatine 252 vorgesehen, welche in der Ausnehmung 230 so angeordnet ist, dass diese ringförmig zur Mittelachse 44 verläuft und beispielsweise sich in einer Ebene 254 erstreckt, welche senkrecht zur Mittelachse 44 verläuft.

Diese Trägerplatine 252 wirkt außerdem als Leiterplatine und trägt die einzelnen Magnetfeldsensoren 224, wobei die einzelnen Magnetfeldsensoren auch elektrisch mit der Trägerplatine 252 verbunden sind, so dass über die Trägerplatine 252 eine Kontaktierung der einzelnen Magnetfeldsensoren 242 erfolgt und dann ausgehend von der Trägerplatine eine elektrische Leitung 256 zur Auswerteeinheit 150 geführt werden kann.

Beispielsweise sitzen dabei die Magnetfeldsensoren 224 nahe einer Außenkante 258 der Trägerplatine und bilden einen von der Trägerplatine 252 abstehenden umlaufenden Sensorkranz 262, welcher den Ring 222 mit den Permanentmagneten 202 bezogen auf die Mittelachse 44 radial außenliegend umschließt.

Somit besteht nun die Möglichkeit, den Ring 222 mit den Permanentmagneten 202 und nachfolgend die Trägerplatine 252 und dem Sensorkranz 262 vor einer Montage derselben in der Ausnehmung 230 miteinander zu verbinden, beispielsweise zu vergießen, oder den Ring 222 und die Sensoranordnung 250 mit dem den Ring 222 radial außenliegend umschließenden Sensorkranz 262 in die Ausnehmung 230 des Kugelkörpers 100" einzulegen und dann den Ringkörper 240 zum Verschließen der Ausnehmung 230 aufzusetzen.

In beiden Fällen liegt die Sensoranordnung 250 mit der Trägerplatine 252 auf dem Ring 222, während der Sensorkranz 262 den Ring 222 radial außenliegend umgibt, so dass die Sensoranordnung 250 und der Ring 222 eine in sich kompakte Einheit bilden.

Dabei ist der Ringkörper 240 so ausgebildet, dass er mit seiner Außenfläche 246 den Kugelkörper 100" so ergänzt, dass eine zusammenhängende Kugeloberfläche 110 zwischen der unteren Endfläche 102 und der oberen Endfläche 104 vorliegt und außerdem der Schutzring 244 den Sensorkranz 262 überdeckt.

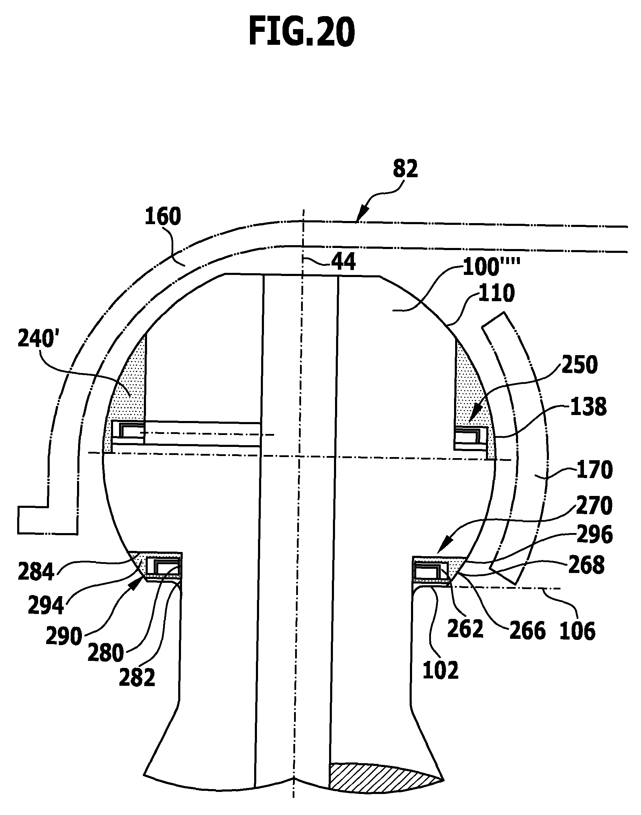

Bei einem fünften Ausführungsbeispiel, dargestellt in Fig. 20, ist in dem Kugelkörper 100"" dieselbe Sensoranordnung 250 vorgesehen, wie bei dem vierten Ausführungsbeispiel und außerdem ist auch der Ringkörper 240 in gleicher Weise ausgebildet, wie bei dem vierten Ausführungsbeispiel.

Eine exakte Analyse der Einhüllenden EHZ, wie sie von der Sensoranordnung 250 erfasst werden, zeigt dabei, dass die Einhüllenden EHZ abhängig von einer Verkippung um die Längsachse L oder die Querachse Q (dargestellt in Fig. 5) sind.

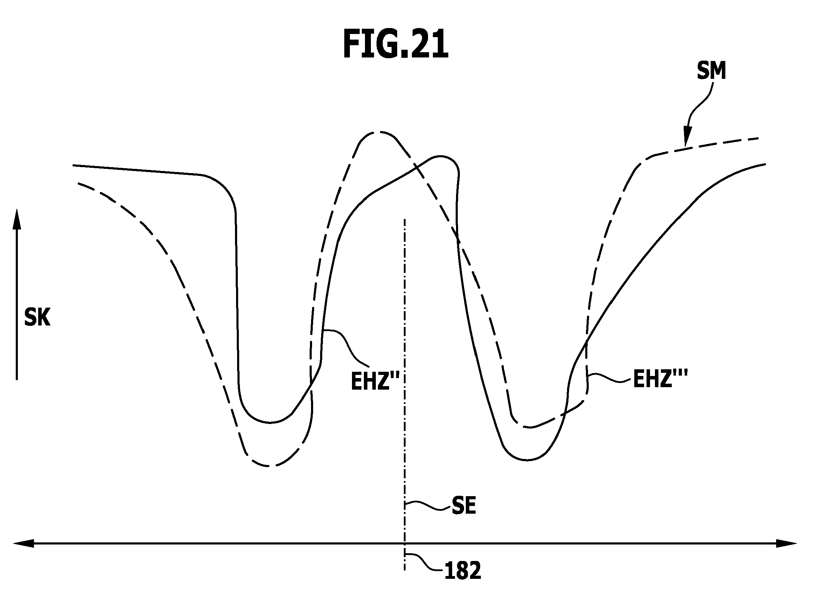

Beispielsweise ergibt eine derartige Verkippung die Einhüllende EHZ" und eine andere derartige Verkippung die Einhüllende EHZ"', wie sie in Fig. 21 dargestellt sind, obwohl der Winkel zwischen der Längsmittelebene 182 und der Längsmittelebene 30 der Anhängekupplung 20 derselbe ist.

Um daher eine Verkippung der Zugkugelkupplung 82 um die Längsachse L und die Querachse Q erfassen zu können, ist vorzugsweise der Kugelkörper 100"", wie in Fig. 20 dargestellt, mit einer zweiten Sensorzone 266 versehen, in welcher ebenfalls Detektionsorte 268 liegen, die in gleicher Weise wie die Detektionsorte 138 rings um die Mittelachse 44 angeordnet sind.

Die zweite Sensorzone 266 schließt sich dabei unmittelbar an die untere Endfläche 102 des Kugelkörpers 100"" an.

Um die Verkippung der Zugkugelkupplung 82 um die Längsachse L und die Querachse Q exakt erfassen zu können, ist eine Sensoranordnung 270 vorgesehen, die hinsichtlich ihres Aufbaus und ihrer Arbeitsweise sowie des Zusammenwirkens mit der Auswerteeinheit 150 in gleicher Weise funktioniert, wie die Sensoranordnung 250, so dass diesbezüglich vollinhaltlich auf die Sensoranordnung 250 Bezug genommen werden kann.

Die Sensoranordnung 270 sitzt dabei in einer sich ausgehend von der unteren Endfläche 102 in den Kugelkörper 104' hinein erstreckenden Ausnehmung 280, welche eine Innenwand 282 und einen Boden 284 aufweist.

Dabei erstreckt sich die Ausnehmung 280 ausgehend von der zweiten Endfläche 102 in den Kugelkörper 100"" hinein.

Vorzugsweise verläuft dabei der Boden 284 parallel zur unteren Ebene 106 und somit senkrecht zur Mittelachse 44, während die Innenwand 282 zylindrisch um die Mittelachse 44 umläuft.

Die Sensoranordnung 270 sitzt dabei ihrerseits in einem Ringkörper 290, welcher einerseits die untere Endfläche 102 bildet und andererseits die Kugeloberfläche 110 des Kugelkörpers 104' im Bereich der Ausnehmung 280 bis zur unteren Endfläche 102 ergänzt, so dass dadurch der Kugelkörper 104' dieselbe Kugeloberfläche 110 aufweist, wie bei den voranstehenden Ausführungsbeispielen.

Ferner umfasst der Ringkörper 290 noch einen Schutzring 294, welcher die Sensoranordnung 270 auf ihrer radial umlaufenden Außenseite im Bereich des Sensorkranzes 262 umschließt, so dass durch diesen Schutzring 294 die Magnetfeldsensoren 202 des Sensorkranzes 262 geschützt sind, wobei der Ringkörper 290 eine Außenfläche 296 aufweist, die exakt die Kugeloberfläche 110 bis zur unteren Endfläche 102 ergänzt.

Durch die Signale der Sensoranordnung 270 besteht nun die Möglichkeit, ein Maß für die Verkippung der Zugkugelkupplung 82 um die Längsachse L und/oder die Querachse Q zu ermitteln, welches eine Korrektur der Einhüllenden EHZ, dargestellt in Fig. 21 hinsichtlich der Verkippung ermöglicht.

Darüber hinaus liefert die Sensoranordnung 270 außerdem Signalwerte, die eine verbesserte Identifikation der am Kugelkörper 100 angreifenden Körper K ermöglicht, beispielsweise eine verbesserte Identifikation der Zugkugelkupplung 82 im Vergleich zur Kupplung 72.

## Patentansprüche

1. Anhängekupplung für Kraftfahrzeuge, umfassend einen an einer Fahrzeugkarosserie (12) montierbaren Kupplungskugelträger (52) und eine Kupplungskugel (40) mit einem Kugelkörper (100), der eine sich zwischen einem Kugelansatz (90) und einer oberen Endfläche (104) des Kugelkörpers (100) erstreckende Kugeloberfläche (110) aufweist, wobei die Kugeloberfläche (110) eine Sensorzone (126) umfasst, in der mehrere voneinander verschiedene stationäre Detektionsorte (138) liegen, wobei jedem Detektionsort (138) eine unterhalb der Kugeloberfläche (110) in dem Kugelkörper (100) stationär angeordnete Sensoreinheit (148) zugeordnet ist und wobei jede Sensoreinheit (148) so ausgebildet ist, dass sie an dem jeweiligen Detektionsort (138) einen in einem Nahbereich (140) über der Kugeloberfläche (110) vorhandenen Körper (K) erfasst, und wobei die Sensoreinheiten (148) mit einer Auswerteeinheit (150) gekoppelt sind, welche die Gesamtheit der von den Sensoreinheiten (148) erzeugten Signalwerte (SK) erfasst und auswertet, **dadurch gekennzeichnet, dass** die Auswerteeinheit (150) die an den jeweiligen Detektionsorten (138) erfassten Signalwerte (SK) detektionsortbezogen auswertet, dass die Auswerteeinheit (150) aus den Signalwerten (SK) ein detektionsortbezogenes Signalwertmuster von dem jeweiligen Körper (K) erfasst, , dass die Auswerteeinheit (150) das detektionsortbezogene Signalwertmuster (SM) durch eine Einhüllende (EHL, EHZ) annähert, deren Werte eine Funktion der Detektionsorte (138) sind.

2. Anhängekupplung nach Anspruch 1, **dadurch gekennzeichnet, dass** die Sensorzone (126) auf einer Seite einer senkrecht zu einer Mittelachse (44) der Kupplungskugel (40) verlaufenden Äquatorialebene (116) der Kugeloberfläche (110) angeordnet ist.

3. Anhängekupplung nach einem der voranstehenden Ansprüche, **dadurch gekennzeichnet, dass** die Sensorzone (126) zwischen einer unteren Begrenzungsebene (132) und einer oberen Begrenzungsebene (134) liegt, die parallel zur Äquatorialebene (116) verlaufen.

4. Anhängekupplung nach einem der voranstehenden Ansprüche, **dadurch gekennzeichnet, dass** die Sensorzone (126) zumindest in einem rückwärtigen Oberflächenbereich (136) der Kugeloberfläche (110) liegt.

5. Anhängekupplung nach einem der voranstehenden Ansprüche, **dadurch gekennzeichnet, dass** sich die Sensorzone (126) um die Mittelachse (44) der Kupplungskugel (40) zumindest über einen Teilumfang der Kugeloberfläche (110) erstreckt.

6. Anhängekupplung nach Anspruch 4 oder 5, **dadurch gekennzeichnet, dass** die Sensorzone (126) sich ausgehend von dem rückwärtigen Oberflächenbereich (136) der Kugeloberfläche (110) in entgegengesetzten Umlaufrichtungen um die Mittelachse (44) zumindest über einen Teilumfang der Kugeloberfläche (110) ausdehnt und dass sich insbesondere die Sensorzone (126) zumindest bis zu einer durch die Mittelachse (44) verlaufenden Querebene (QE) der Kupplungskugel (40) erstreckt.

7. Anhängekupplung nach einem der voranstehenden Ansprüche, **dadurch gekennzeichnet, dass** jede der Sensoreinheiten (148) an dem jeweiligen Detektionsort (138) im Nahbereich (140) über der Kugeloberfläche (110) einen Abstand des Körpers (K) von der Kugeloberfläche (110) erfasst.

8. Anhängekupplung nach einem der voranstehenden Ansprüche, **dadurch gekennzeichnet, dass** die Sensoreinheiten (148) berührungslos arbeitende Sensoreinheiten sind.

9. Anhängekupplung nach einem der voranstehenden Ansprüche, **dadurch gekennzeichnet, dass** die Sensoreinheiten (148) am Detektionsort (138) eine Detektionsrichtung (208) mit einer radial zur Mittelachse (44) der Kupplungskugel (40) verlaufenden Komponente aufweisen.

10. Anhängekupplung nach einem der voranstehenden Ansprüche, **dadurch gekennzeichnet, dass** die Detektionsorte (138) in einer um die Mittelachse (44) der Kupplungskugel (40) herum verlaufenden Umlaufrichtung aufeinanderfolgend angeordnet sind und dass insbesondere die Detektionsorte (138) in einer quer zur Mittelachse (44) der Kupplungskugel (40) verlaufenden Detektionsebene (DE) liegen.

11. Anhängekupplung nach einem der voranstehenden Ansprüche, **dadurch gekennzeichnet, dass** der Kugelkörper (100) der Kupplungskugel (40) mit mindestens einer Ausnehmung (210, 230) zur Aufnahme mindestens einer der Sensoreinheiten (148) versehen ist.

12. Anhängekupplung nach Anspruch 11, **dadurch gekennzeichnet, dass** in die Ausnehmung (230) ein Kugelergänzungskörper (240) einsetzbar ist, welcher eine im Bereich der Ausnehmung (230) die Kugeloberfläche (110) ergänzende Außenfläche (246) aufweist.

13. Anhängekupplung nach einem der voranstehenden Ansprüche, **dadurch gekennzeichnet, dass** der durch die Sensoreinheiten (148) erfassbare Körper (K) durch eine Kupplung (72) eines Lastenträgers (80) und/oder durch die Sensoreinheiten (148) erfassbare Körper (K) durch eine Zugkugelkupplung (82) eines Anhängers (80) gebildet ist.

14. Anhängekupplung nach einem der voranstehenden Ansprüche , **dadurch gekennzeichnet, dass** insbesondere das detektionsortbezogene Signalwertmuster des Körpers (K), insbesondere der Kupplung (72) oder der Zugkugelkupplung (82), symmetrisch zu einer Symmetrieebene (SE) des Körpers (K), und somit insbesondere der Kupplung (72) oder der Zugkugelkupplung (82), ist.

15. Anhängekupplung nach einem der voranstehenden Ansprüche , **dadurch gekennzeichnet dass** insbesondere die Einhüllende (EHL, EHZ) durch Parameteranpassung von für die Einhüllende (EHL, EHZ) vorgegebenen Funktionen ermittelt wird.

16. Anhängekupplung nach einem der voranstehenden Ansprüche, **dadurch gekennzeichnet, dass** die Auswerteeinheit (150) zu dem jeweiligen Signalwertmuster (SM) oder zu der jeweiligen Einhüllenden (EHL, EHZ) die Symmetrieebene (SE) ermittelt und dass insbesondere die Auswerteeinheit (150) aufgrund der Lage der Symmetrieebene (SE) relativ zu einer Längsmittelebene (30) einen Winkel zwischen der Symmetrieebene des Körpers (K), insbesondere der Kupplung (72) oder der Zugkugelkupplung (82), und der Längsmittelebene (30) der Anhängekupplung (20) ermittelt.

## Claims

1. Trailer coupling for motor vehicles, comprising a coupling ball carrier (52) mountable on a vehicle body (12) and a coupling ball (40) with a ball body (100) having a ball surface (110) extending between a ball attachment (90) and an upper end surface (104) of the ball body (100), wherein the ball surface (110) comprises a sensor zone (126), several stationary detection locations (138) different from one another being located in said sensor zone, wherein a sensor unit (148) arranged stationarily in the ball body (100) beneath the ball surface (110) is associated with each detection location (138) and wherein each sensor unit (148) is designed such that it detects a body (K) present in a close-proximity area (140) above the ball surface (110) at the respective detection location (138) and wherein the sensor units (148) are coupled to an evaluating unit (150) detecting and evaluating the sum total of the signal values (SK) generated by the sensor units (148), **characterized in that** the evaluating unit (150) evaluates the signal values (SK) detected at the respective detection locations (138) in terms of the detection location, that the evaluating unit (150) compiles from the signal values (SK) a pattern of signal values of the respective body (K) based on the detection location, that the evaluating unit (150) approximates the pattern of signal values (SM) based on the detection location by means of an envelope (EHL, EHZ), the values thereof being a function of the detection locations (138).

2. Trailer coupling as defined in claim 1, **characterized in that** the sensor zone (126) is arranged on a side of an equatorial plane (116) of the ball surface (110) extending at right angles to a central axis (44) of the coupling ball (40).

3. Trailer coupling as defined in either one of the preceding claims, **characterized in that** the sensor zone (126) is located between a lower boundary plane (132) and an upper boundary plane (134) extending parallel to the equatorial plane (116).

4. Trailer coupling as defined in any one of the preceding claims, **characterized in that** the sensor zone (126) is located at least in a rearward surface area (136) of the ball surface (110).

5. Trailer coupling as defined in any one of the preceding claims, **characterized in that** the sensor zone (126) extends around the central axis (44) of the coupling ball (40) at least over part of the circumference of the ball surface (110).

6. Trailer coupling as defined in claim 4 or 5, **characterized in that** the sensor zone (126) stretches from the rearward surface area (136) of the ball surface (110) in opposite circumferential directions around the central axis (44) at least over part of the circumference of the ball surface (110) and that the sensor zone (126) extends, in particular, at least as far as a transverse plane (QE) of the coupling ball (40) extending through the central axis (44).

7. Trailer coupling as defined in any one of the preceding claims, **characterized in that** at the respective detection location (138) each of the sensor units (148) detects a distance of the body (K) from the ball surface (110) in the close-proximity area (140) above the ball surface (110).

8. Trailer coupling as defined in any one of the preceding claims, **characterized in that** the sensor units (148) are sensor units operating without contact.

9. Trailer coupling as defined in any one of the preceding claims, **characterized in that** at the detection location (138) the sensor units (148) have a direction of detection (208) with a component extending radially to the central axis (44) of the coupling ball (40).

10. Trailer coupling as defined in any one of the preceding claims, **characterized in that** the detection locations (138) are arranged so as to follow one another in a circumferential direction extending around the central axis (44) of the coupling ball (40) and that the detection locations (138) are located, in particular, in a plane of detection (DE) extending transversely to the central axis (44) of the coupling ball (40).

11. Trailer coupling as defined in any one of the preceding claims, **characterized in that** the ball body (100) of the coupling ball (40) is provided with at least one recess (210, 230) for accommodating at least one of the sensor units (148).

12. Trailer coupling as defined in claim 11, **characterized in that** a supplementary ball body (240) is insertable into the recess (230), said body having an outer surface (246) supplementing the ball surface (110) in the region of the recess (230).

13. Trailer coupling as defined in any one of the preceding claims, **characterized in that** the body (K) detectable by the sensor units (148) is formed by a coupling (72) of a load bearer (80) and/or the body (K) detectable by the sensor units (148) is formed by a coupling head (82) of a trailer (80).

14. Trailer coupling as defined in any one of the preceding claims, **characterized in that** the pattern of signal values for the body (K), in particular the coupling (72) or the coupling head (82), based on the detection location is, in particular, symmetrical to a plane of symmetry (SE) of the body (K) and therefore, in particular, of the coupling (72) or the coupling head (82).

15. Trailer coupling as defined in any one of the preceding claims, **characterized in that** the envelope (EHL, EHZ) is ascertained, in particular, by way of parameter adjustment of functions predetermined for the envelope (EHL, EHZ).

16. Trailer coupling as defined in any one of the preceding claims, **characterized in that** the evaluating unit (150) ascertains the plane of symmetry (SE) for the respective pattern of signal values (SM) or for the respective envelope (EHL, EHZ) and that the evaluating unit (150) ascertains, in particular, an angle between the plane of symmetry of the body (K), in particular the coupling (72) or the coupling head (82), and a longitudinal central plane (30) of the trailer coupling (20) on the basis of the position of the plane of symmetry (SE) relative to the longitudinal central plane (30).

## Revendications

1. Attelage pour des véhicules automobiles, comprenant un support de boule d'attelage (52) pouvant être monté sur une carrosserie de véhicule (12) et une boule d'attelage (40) avec un corps de boule (100) qui présente une surface de boule (110) s'étendant entre une saillie de boule (90) et une surface d'extrémité supérieure (104) du corps de boule (100), la surface de boule (110) comportant une zone de capteur (126), dans laquelle se trouvent plusieurs lieux de détection (138) stationnaires différents les uns des autres, à chaque lieu de détection (138) étant associée une unité de capteur (148) agencée de manière stationnaire sous la surface de boule (110) dans le corps de boule (100) et chaque unité de capteur (148) étant réalisée de sorte qu'elle détecte sur le lieu de détection (138) respectif un corps (K) présent dans une zone proche (140) sur la surface de boule (110), et les unités de capteur (148) étant couplées à une unité d'évaluation (150) qui détecte et évalue l'intégralité des valeurs de signal (SK) générées par les unités de capteur (148), **caractérisé en ce que** l'unité d'évaluation (150) évalue les valeurs de signal (SK) détectées sur les lieux de détection (138) respectifs par rapport au lieu de détection, **en ce que** l'unité d'évaluation (150) détecte à partir des valeurs de signal (SK), un modèle de valeur de signal relatif au lieu de détection du corps respectif (K), **en ce que** l'unité d'évaluation (150) approche le modèle de valeur de signal (SM) relatif au lieu de détection par une enveloppante (EHL, EHZ), dont les valeurs sont une fonction des lieux de détection (138).

2. Attelage selon la revendication 1, **caractérisé en ce que** la zone de capteur (126) est agencée sur un côté d'un plan équatorial (116) de la surface de boule (110) s'étendant perpendiculairement à un axe médian (44) de la boule d'attelage (40).

3. Attelage selon l'une quelconque des revendications précédentes, **caractérisé en ce que** la zone de capteur (126) se trouve entre un plan de délimitation inférieur (132) et un plan de délimitation supérieur (134) qui s'étendent parallèlement au plan équatorial (116).

4. Attelage selon l'une quelconque des revendications précédentes, **caractérisé en ce que** la zone de capteur (126) se trouve au moins dans une zone de surface arrière (136) de la surface de boule (110).

5. Attelage selon l'une quelconque des revendications précédentes, **caractérisé en ce que** la zone de capteur (126) s'étend autour de l'axe médian (44) de la boule d'attelage (40) au moins sur une périphérie partielle de la surface de boule (110).

6. Attelage selon la revendication 4 ou 5, **caractérisé en ce que** la zone de capteur (126) s'étire à partir de la zone de surface (136) arrière de la surface de boule (110) dans des sens tournant inverses autour de l'axe médian (44) au moins sur une périphérie partielle de la surface de boule (110) et **en ce que** la zone de capteur (126) s'étend en particulier au moins jusqu'à un plan transversal (QE) s'étendant par l'axe médian (44) de la boule d'attelage (40).

7. Attelage selon l'une quelconque des revendications précédentes, **caractérisé en ce que** chacune des unités de capteur (148) détecte une distance du corps (K) par rapport à la surface de boule (110) sur le lieu de détection respectif (138) dans la zone proche (140) sur la surface de boule (110).

8. Attelage selon l'une quelconque des revendications précédentes, **caractérisé en ce que** les unités de capteur (148) sont des unités de capteur travaillant sans contact.

9. Attelage selon l'une quelconque des revendications précédentes, **caractérisé en ce que** les unités de capteur (148) sur le lieu de détection (138) présentent un sens de détection (208) avec un composant s'étendant radialement à l'axe médian (44) de la boule d'attelage (40).

10. Attelage selon l'une quelconque des revendications précédentes, **caractérisé en ce que** les lieux de détection (138) sont agencés se suivant dans un sens tournant s'étendant autour de l'axe médian (44) de la boule d'attelage (40) et **en ce qu'**en particulier les lieux de détection (138) se situent dans un plan de détection (DE) s'étendant transversalement à l'axe médian (44) de la boule d'attelage (40).

11. Attelage selon l'une quelconque des revendications précédentes, **caractérisé en ce que** le corps de boule (100) de la boule d'attelage (40) est pourvu d'au moins un évidement (210, 230) pour la réception d'au moins une des unités de capteur (148).

12. Attelage selon la revendication 11, **caractérisé en ce qu'**un corps complémentaire de boule (240) peut être inséré dans l'évidement (230), lequel présente une surface extérieure (246) complétant la surface de boule (110) dans la zone de l'évidement (230).

13. Attelage selon l'une quelconque des revendications précédentes, **caractérisé en ce que** le corps (K) détectable par les unités de capteur (148) est formé par un couplage (72) d'un support de charge (80) et/ou le corps (K) détectable par les unités de capteur (148) est formé par un attelage de boule de traction (82) d'une remorque (80).

14. Attelage selon l'une quelconque des revendications précédentes, **caractérisé en ce qu'**en particulier le modèle de valeur de signal relatif au lieu de détection du corps (K), en particulier du couplage (72) ou de l'attelage de boule de traction (82), est symétrique à un plan de symétrie (SE) du corps (K), et ainsi en particulier du couplage (72) ou de l'attelage de boule de traction (82).

15. Attelage selon l'une quelconque des revendications précédentes, **caractérisé en ce qu'**en particulier l'enveloppante (EHL, EHZ) est déterminée par l'adaptation de paramètres de fonctions prescrites pour l'enveloppante (EHL, EHZ).

16. Attelage selon l'une quelconque des revendications précédentes, **caractérisé en ce que** l'unité d'évaluation (150) détermine pour le modèle de valeur de signal (SM) respectif ou pour les enveloppantes (EHL, EHZ) respectives le plan de symétrie (SE) et **en ce qu'**en particulier l'unité d'évaluation (150) détermine en raison de la position du plan de symétrie (SE) par rapport à un plan médian longitudinal (30) un angle entre le plan de symétrie du corps (K), en particulier du couplage (72) ou de l'attelage de boule de traction (82), et le plan médian longitudinal (30) de l'attelage (20).
